# EUROPEAN PATENT APPLICATION

(11) **EP 4 723 604 A1**
(43) Date of publication of application: **08.04.2026**
(21) Application number: 25746818.1
(22) Date of filing: 04.08.2025
(51) Int. Cl.: H04M 1/02, G06F 1/16, H02K 7/116

(54) **ELECTRONIC DEVICE INCLUDING DRIVING ASSEMBLY**

(30) Priority: 06.08.2024 KR 20240104526; 04.10.2024 KR 20240135017
(71) Applicant: Samsung Electronics Co., Ltd, Suwon-si, Gyeonggi-do 16677 (KR)
(72) Inventor: YOO, Changhee, Suwon-si, Gyeonggi-do 16677 (KR); KANG, Hyunggwang, Suwon-si, Gyeonggi-do 16677 (KR); KWON, Taewook, Suwon-si, Gyeonggi-do 16677 (KR); KIM, Moonsun, Suwon-si, Gyeonggi-do 16677 (KR); KIM, Sungho, Suwon-si, Gyeonggi-do 16677 (KR); SEO, Junghoon, Suwon-si, Gyeonggi-do 16677 (KR); SONG, Changin, Suwon-si, Gyeonggi-do 16677 (KR); AHN, Sungho, Suwon-si, Gyeonggi-do 16677 (KR); CHO, Hyoungtak, Suwon-si, Gyeonggi-do 16677 (KR); LEE, Soyoung, Suwon-si, Gyeonggi-do 16677 (KR); LEE, Jungwoo, Suwon-si, Gyeonggi-do 16677 (KR)
(74) Representative: HGF
(86) International application number: PCT/KR2025/011634
(87) International publication number: WO 2026/034947

(57) **Abstract**

The disclosure relates to an electronic device. An electronic device according to an embodiment of the disclosure may comprise a first housing, a second housing movably coupled to the first housing, and a driving assembly configured to move the first housing or the second housing, wherein the driving assembly comprises a motor including a rotatable shaft, a pinion gear, a deceleration module coupling the rotatable shaft of the motor to the pinion gear, a rack gear engaged with the pinion gear and configured to move the first housing or the second housing in conjunction with rotation of the pinion gear, and a fixing member detachably fixing at least one of the motor, the pinion gear, and the deceleration module to the first housing or the second housing, and wherein the motor, the deceleration module, and the pinion gear are detachably coupled to one another.

## Description

### [Technical Field]

Various embodiments of the disclosure relate to an electronic device, e.g., an electronic device including a driving assembly.

### [Background Art]

Advancing information communication technologies and semiconductor technologies accelerate the spread and use of various electronic devices. In particular, recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and high-speed or high-volume wireless communication becomes commonplace, an electronic device, such as a mobile communication terminal, is recently being equipped with various functions. For example, an electronic device comes with various integrated functions, including an entertainment function, such as playing video games, a multimedia function, such as replaying music/videos, a communication and security function for mobile banking, and a scheduling or e-wallet function. These electronic devices have been downsized to be conveniently carried by users.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

An electronic device according to an embodiment of the disclosure may comprise a first housing, a second housing movably disposed with respect to the first housing, and a driving assembly configured to generate power to move the first housing or the second housing, wherein the driving assembly comprises a motor including a shaft configured to be rotatable and a first case surrounding the shaft, a deceleration module including a deceleration gear portion being connectable to the shaft and a second case surrounding the deceleration gear portion, a pinion gear configured to receive power by connecting to the deceleration gear portion, a rack gear engaged with the pinion gear and configured to move the first housing or the second housing in conjunction with rotation of the pinion gear, a fixing member surrounding at least part of the pinion gear, and a coupling structure configured from one of the first case and the second case toward the other of the first case and the second case for the motor and the deceleration module to be detachably coupled.

An electronic device according to an embodiment of the disclosure may comprise a first housing, a second housing movably disposed with respect to the first housing, and a driving assembly configured to generate power to move the first housing or the second housing. The driving assembly may comprise a motor configured to generate power, a pinion gear receiving the power from the motor, a deceleration module connecting the motor and the pinion gear, and a rack gear engaged with the pinion gear and configured to move together with any one of the first housing and the second housing. The motor, the deceleration module, and the pinion gear may be detachably coupled to one another.

An electronic device according to an embodiment of the disclosure may comprise a first housing, a second housing movably disposed with respect to the first housing, and a driving assembly configured to generate power to move the first housing or the second housing. The driving assembly may comprise a motor generating power, a pinion gear receiving the power generated from the motor, a deceleration module connecting the motor and the pinion gear, a rack gear engaged with the pinion gear and configured to be movable together with any one of the first housing and the second housing, and a damper configured to attenuate the power generated from the motor.

### [Brief Description of Drawings]

The foregoing and other aspects, configurations, and/or advantages of an embodiment of the disclosure will be more apparent from the following detailed description taken in conjunction with the accompanying drawings.
FIG. 1 is a block diagram illustrating an electronic device in a network environment according to various embodiments of the disclosure.
FIG. 2 is a view illustrating a state in which a portion of a display is received in a housing according to an embodiment of the disclosure.
FIG. 3 is a view illustrating a state in which a portion of a display is exposed to the outside of a housing according to an embodiment of the disclosure.
FIG. 4 is an exploded view illustrating an electronic device according to an embodiment of the disclosure.
FIG. 5 illustrates a portion of an electronic device according to an embodiment of the disclosure.
FIG. 6A illustrates a portion in a first state of an electronic device according to an embodiment of the disclosure.
FIG. 6B illustrates a portion in a second state of an electronic device according to an embodiment of the disclosure.
FIG. 7 is a view illustrating a driving assembly according to an embodiment of the disclosure.
FIG. 8 is an enlarged view illustrating a portion of an electronic device according to an embodiment of the disclosure.
FIG. 9 is a view illustrating a portion of a driving assembly according to an embodiment of the disclosure.
FIG. 10 is an exploded view illustrating a portion of a driving assembly according to an embodiment of the disclosure.
FIG. 11 is an exploded view illustrating a portion of a driving assembly according to an embodiment of the disclosure.
FIG. 12 is a view illustrating a portion of a driving assembly according to an embodiment of the disclosure.
FIG. 13 is a view illustrating a portion of a driving assembly according to an embodiment of the disclosure.
FIG. 14 is a view illustrating a portion of a driving assembly according to an embodiment of the disclosure.
FIG. 15 is a view illustrating a deceleration module according to an embodiment of the disclosure.
FIG. 16 is a view illustrating a deceleration module according to an embodiment of the disclosure.
FIG. 17 is a view illustrating a deceleration module according to an embodiment of the disclosure.
FIG. 18 is a cross-sectional view illustrating a deceleration module according to an embodiment of the disclosure.
FIG. 19 is a cross-sectional view illustrating a deceleration module according to an embodiment of the disclosure.
FIG. 20 is a view illustrating a motor according to an embodiment of the disclosure.
FIG. 21 is a view illustrating a motor according to an embodiment of the disclosure.
FIG. 22 is a view illustrating a fixing member according to an embodiment of the disclosure.
FIG. 23 is a view illustrating a driving assembly according to an embodiment of the disclosure.
FIG. 24 is a view illustrating a fixing member according to an embodiment of the disclosure.
FIG. 25 is a view illustrating a driving assembly according to an embodiment of the disclosure.
FIG. 26 is a view illustrating a driving assembly according to an embodiment of the disclosure.
FIG. 27 is an exploded view illustrating a portion of a driving assembly according to an embodiment of the disclosure.
FIG. 28 is an exploded view illustrating a portion of a driving assembly according to an embodiment of the disclosure.
FIG. 29 is an exploded view illustrating a portion of a driving assembly according to an embodiment of the disclosure.
FIG. 30 is a view illustrating disassembly of a driving assembly according to an embodiment of the disclosure.
FIG. 31 is a view illustrating a portion of an electronic device according to an embodiment of the disclosure.
FIG. 32 is a view illustrating a driving assembly according to an embodiment of the disclosure.
FIG. 33 is a view illustrating a fixing member according to an embodiment of the disclosure.
FIG. 34 is a view illustrating disassembly of a driving assembly according to an embodiment of the disclosure.
FIG. 35 is a view illustrating a driving assembly according to an embodiment of the disclosure.
FIG. 36 is a view illustrating a driving assembly according to an embodiment of the disclosure.

Throughout the drawings, like reference numerals may be assigned to like parts, components, and/or structures.

### [Mode for the Invention]

The following description taken in conjunction with the accompanying drawings may provide an understanding of various exemplary implementations of the disclosure, including claims and their equivalents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

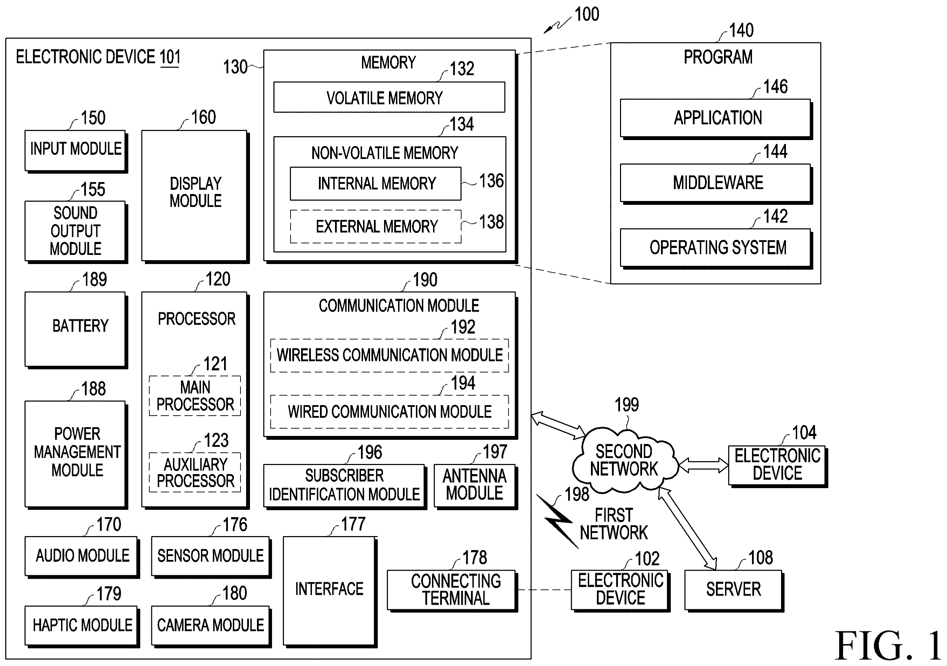

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

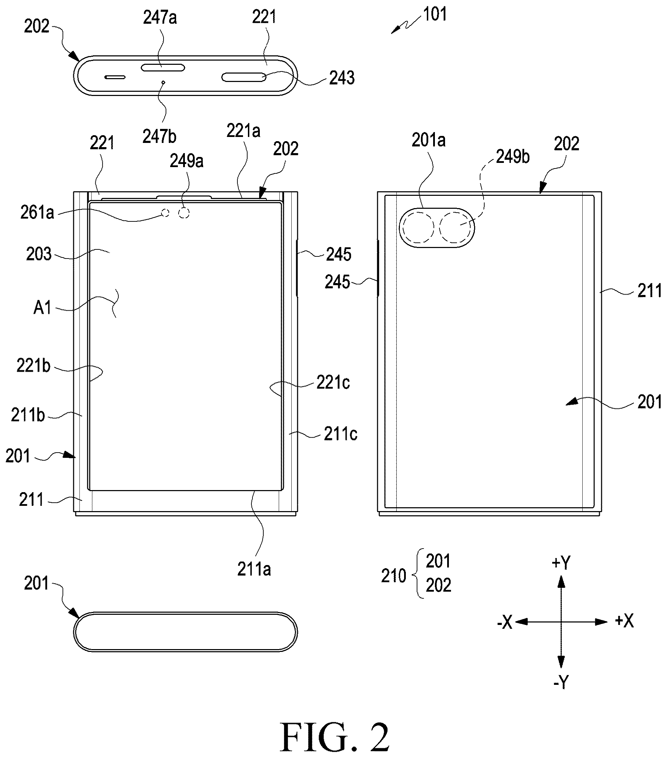

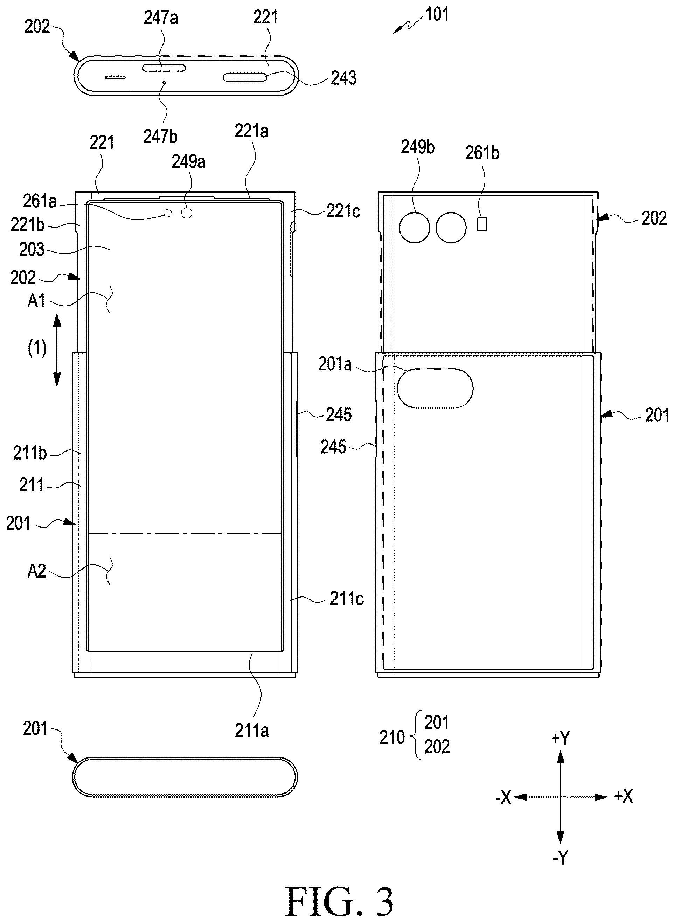

FIG. 2 is a view illustrating a state in which a portion of a display is received in a housing according to an embodiment of the disclosure. FIG. 2 is a view illustrating a state in which a second display area (e.g., the display area A2 of FIG. 3) of a display is received in a housing according to an embodiment of the disclosure. FIG. 3 is a view illustrating a state in which a portion of a display is exposed to the outside of a housing according to an embodiment of the disclosure. FIG. 3 is a view illustrating a state in which a second display area of a display is exposed to the outside of a housing according to an embodiment of the disclosure;

FIGS. 2 and 3 illustrate a structure in which the display 203 (e.g., flexible display or rollable display) is extendable in the length direction (e.g., +Y direction) when the electronic device 101 is viewed from the front. However, the extending direction of the display 203 is not limited to one direction (e.g., +Y direction). For example, the extending direction of the display 203 may be changed in design to be extendable in the upper direction (+Y direction), right direction (e.g., +X direction), left direction (e.g., -X direction), and/or lower direction (e.g., -Y direction).

The state illustrated in FIG. 2 may be referred to as a slide-in state of the electronic device 101 or a state in which the second display area A2 of the display 203 is closed.

The state illustrated in FIG. 3 may be referred to as a slide-out state of the electronic device 101 or a state in which the second display area A2 of the display 203 is open.

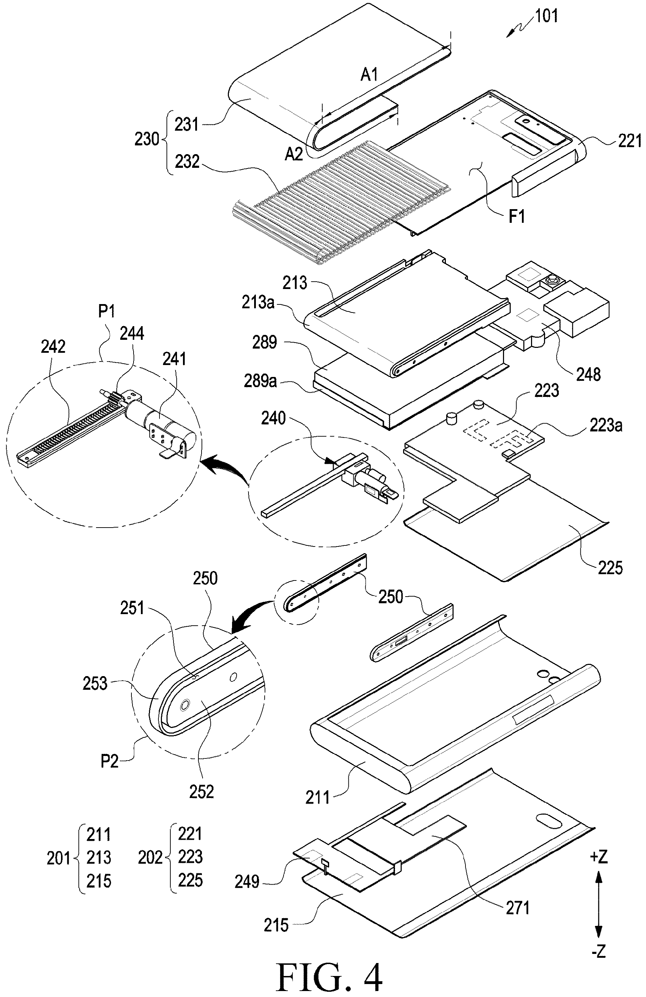

The embodiments of FIGS. 2 and 3 may be combined with the embodiment of FIG. 1 or the embodiments of FIGS. 4 to 36.

Referring to FIGS. 2 and 3, an electronic device 101 (e.g., the electronic device 101 of FIG. 1) may include a housing 210. The housing 210 may include a first housing 201 and a second housing 202 disposed to be movable relative to the first housing 201. According to an embodiment, the electronic device 101 may be interpreted as having a structure in which the first housing 201 is disposed to be slidable with respect to the second housing 202. According to an embodiment, the second housing 202 may be disposed to perform reciprocating motion by a predetermined distance in a predetermined direction with respect to the first housing 201, for example, a direction indicated by an arrow (1).

According to an embodiment, the second housing 202 may be referred to as a slide portion or a slide housing, and may be movable relative to the first housing 201. According to an embodiment, the second housing 202 may accommodate various electrical and electronic components, such as a circuit board or a battery. When the electronic device 101 is in the slide-in state, the second housing 202 may be defined as being in a retracted position, and when the electronic device 101 is in the slide-out state, the second housing 202 may be defined as being in an extended position.

According to an embodiment, the slide-in state of the electronic device 101 (or the slide-out state of the electronic device 101) may be changed into the slide-out state of the electronic device 101 (or the slide-in state of the electronic device 101) based on a defined user input. For example, the slide-in state of the electronic device 101 (or the slide-out state of the electronic device 101) may be changed into the slide-out state (or the slide-in state of the electronic device 101) in response to a user input to a physical button exposed through a portion of the first housing 201 or a portion of the second housing 202. For example, the slide-in state (or the slide-out state of the electronic device 101) may be changed into the slide-out state (or the slide-in state of the electronic device 101) in response to a touch input to an executable object displayed in the screen display area (e.g., the first display area A1). For example, the slide-in state (or the slide-out state of the electronic device 101) may be changed into the slide-out state (or the slide-in state of the electronic device 101) in response to a touch input having a pressing strength of a reference strength or more at a contact point on the screen display area (e.g., the first display area A1). For example, the slide-in state (or the slide-out state of the electronic device 101) may be changed into the slide-out state (or the slide-in state of the electronic device 101) in response to a voice input received through the microphone of the electronic device 101. For example, the slide-in state (or the slide-out state of the electronic device 101) may be changed into the slide-out state (or the slide-in state of the electronic device 101) in response to an external force applied to the first housing 201 and/or the second housing 202 to move the second housing 202 with respect to the first housing 201. For example, the slide-in state (or the slide-out state of the electronic device 101) may be changed into the slide-out state (or the slide-in state of the electronic device 101) in response to a user input identified from an external electronic device (e.g., earbuds or a smart watch) connected with the electronic device 101. For example, the slide-in state (or the slide-out state of the electronic device 101) may be changed into the slide-out state (or the slide-in state of the electronic device 101) in response to a user gesture that is detected via a camera, For example, the slide-in state (or the slide-out state of the electronic device 101) may be changed into the slide-out state (or the slide-in state of the electronic device 101) in response to a specific movement of the electronic device 101, such as a shaking movement or rotating movement for example. However, the slide in-out operations of the electronic device 101 are not limited thereto.

According to an embodiment, the first housing 201 may receive an actuator (e.g., a motor), a speaker, a sim socket, and/or a sub circuit board electrically connected with a main circuit board. The second housing 202 may receive a main circuit board on which electric components, such as an application processor (AP) and a communication processor (CP) are mounted. According to an embodiment, the second housing 202 may receive the actuator, speaker, sim socket, and/or the sub circuit board electrically connected with the main circuit board, and the first housing 201 may receive the main circuit board where electrical components, such as an application processor (AP) or a communication processor (CP), are mounted. According to an embodiment, the sub circuit board and the main circuit board may be disposed in the first housing 201 or the second housing 202.

According to an embodiment, the first housing 201 may include a first cover member 211 (e.g., a main case). The first cover member 211 may include a 1-1th sidewall 211a, a 1-2th sidewall 211b extending from the 1-1th sidewall 211a, and a 1-3th sidewall 211c extending from the 1-1th sidewall 211a and substantially parallel to the 1-2th sidewall 211b. According to an embodiment, the 1-2th sidewall 211b and the 1-3th sidewall 211c may be formed substantially perpendicular to the 1-1th sidewall 211a.

According to an embodiment, the 1-1th sidewall 211a, 1-2th sidewall 211b, and 1-3th sidewall 211c of the first cover member 211 may be formed to have a side opening (e.g., front opening) to receive (or surround) at least a portion of the second housing 202. For example, at least a portion of the second housing 202 may be surrounded by the first housing 201 and be slid in the direction parallel to the first surface (e.g., the first surface F1 of FIG. 4), e.g., arrow (1) direction, while being guided by the first housing 201. According to an embodiment, the 1-1th sidewall 211a, the 1-2th sidewall 211b, and/or the 1-3th sidewall 211c of the first cover member 211 may be integrally formed. According to an embodiment, the 1-1th sidewall 211a, the 1-2th sidewall 211b, and/or the 1-3th sidewall 211c of the first cover member 211 may be formed as separate structures and be combined or assembled.

According to an embodiment, the first cover member 211 may be formed to surround at least a portion of the display 203. For example, at least a portion of the display 203 may be formed to be surrounded by the 1-1th sidewall 211a, the 1-2th sidewall 211b, and/or the 1-3th sidewall 211c of the first cover member 211.

According to an embodiment, the second housing 202 may include a second cover member 221 (e.g., a slide plate). The second cover member 221 may have a plate shape and include a first surface (e.g., the first surface F1 of FIG. 4) supporting internal components. For example, the second cover member 221 may support at least a portion of the display 203 (e.g., the first display area A1). According to an embodiment, the second cover member 221 may be referred to as a front cover.

According to an embodiment, the second cover member 221 may include a 2-1th sidewall 221a, a 2-2th sidewall 221b extending from the 2-1th sidewall 221a, and a 2-3th sidewall 221c extending from the 2-1th sidewall 221a and substantially parallel to the 2-2th sidewall 221b. According to an embodiment, the 2-2th sidewall 221b and the 2-3th sidewall 221c may be formed substantially perpendicular to the 2-1th sidewall 221a.

According to various embodiments, as the second housing 202 moves in a first direction (e.g., direction (1)) parallel to the 2-2th sidewall 221b or the 2-3th sidewall 221c, the slide-in state and slide-out state of the electronic device 101 may be formed. In the slide-in state of the electronic device 101, the second housing 202 may be positioned at a first distance from the 1-1th sidewall 211a of the first housing 201. In the slide-out state of the electronic device 101, the second housing 202 may move to be positioned at a second distance larger than the first distance from the 1-1th sidewall 211a of the first housing 201. In an embodiment, in the slide-in state of the electronic device 101, the first housing 201 may be formed to surround a portion of the 2-2th sidewall 221b and the 2-3th sidewall 221c.

According to an embodiment, the electronic device 101 may have an intermediate state between the slide-in state (e.g., fully closed state) of FIG. 2 and the slide-out state (e.g., fully open state) of FIG. 3. The distance between the 1-1th sidewall 211a and the 2-1th sidewall 221a in the intermediate state of the electronic device 101 may be shorter than the distance between the 1-1th sidewall 211a and the 2-1th sidewall 221a of the electronic device 101 in the fully open state and be longer than the distance between the 1-1th sidewall 211a and the 2-1th sidewall 221a of the electronic device 101 in the fully closed state. According to an embodiment, as at least a portion of the display 203 slides in the intermediate state of the electronic device 101, the area exposed to the outside may vary. For example, in the intermediate state of the electronic device 101, the ratio of the width (length in the X direction) to the height (length in the Y direction) of the display 203 and/or the distance between the 1-1th sidewall 211a and the 2-1th sidewall 221a may be changed based on the slide of the electronic device 101.

According to an embodiment, the electronic device 101 may include a display 203, a key input device 245, a connector hole 243, audio modules 247a and 247b, or camera modules 249a and 249b. According to an embodiment, the electronic device 101 may further include an indicator (e.g., a light emitting diode (LED) device) or various sensor modules.

According to an embodiment, the display 203 may be formed so that the size of a portion of the housing 210, which may be viewed from the front, is changed based on the slide of the second housing 202. According to an embodiment, the display 203 may include a first display area A1 and a second display area A2 configured to be exposed to the outside of the electronic device 101 based on the slide of the second housing 202.

According to an embodiment, the first display area A1 may be disposed substantially on the second housing 202. For example, the first display area A1 may be disposed on the second cover member 221 of the second housing 202. According to an embodiment, the second display area A2 may extend from the first display area A1, and the second display area A2 may be received in the first housing 201 or visually exposed to the outside of the electronic device 101 as the second housing 202 slides relative to the first housing 201. According to an embodiment, as the electronic device 101 changes from the slide-in state to slide-out state, the display 203 may extend in the lower direction (e.g., -Y direction) of the electronic device 101. For example, in the slide-out state of the electronic device 101, the second display area A2 may be visually exposed under the electronic device 101 (e.g., in the -Y direction). According to an embodiment, as the electronic device 101 changes from the slide-in state to slide-out state, the display 203 may extend in the upper direction (e.g., +Y direction) of the electronic device 101. For example, in the slide-out state of the electronic device 101, the second display area A2 may be visually exposed above the electronic device 101 (e.g., in the +Y direction).

According to an embodiment, the second display area A2 may be received in the space positioned inside the first housing 201 or exposed to the outside of the electronic device while being substantially guided by one area (e.g., the curved surface 213a of FIG. 4) of the first housing 201. According to an embodiment, the second display area A2 may move based on a slide of the second housing 202 in the first direction (e.g., the direction indicated by the arrow (1)). For example, while the second housing 202 slides, a portion of the second display area A2 may be deformed into a curved shape in a position corresponding to the curved surface 213a of the first housing 201.

According to an embodiment, as viewed from above the second cover member 221 (e.g., front cover), if the electronic device 101 changes from the slide-in state to slide-out state (e.g., if the second housing 202 slides to extend from the first housing 201), the second display area A2 may be gradually exposed to the outside of the first housing 201 and, together with the first display area A1, form a substantially flat surface. According to an embodiment, the display 203 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the slide-in state or slide-out state of the electronic device 101, the exposed portion of the second display area A2 may be positioned on a portion (e.g., the curved surface 213a of FIG. 4) of the first housing, and a portion of the second display area A2 may remain in the curved shape in the position corresponding to the curved surface 213a.

According to an embodiment, the key input device 245 may be positioned in an area of the housing 210 (e.g., the first housing 201 and/or second housing 202). Depending on the appearance and the state of use, the electronic device 101 may be designed to omit the illustrated key input device 245 or to include additional key input device(s). According to an embodiment, the electronic device 101 may include a key input device (not shown), e.g., a home key button or a touchpad disposed around the home key button. According to an embodiment, at least a portion of the key input device 245 may be disposed on the 1-1th sidewall 211a, the 1-2th sidewall 211b, or the 1-3th sidewall 211c of the first housing 201. According to an embodiment, at least a portion of the key input device 245 may be disposed on the 2-1th sidewall 221a, the 2-2th sidewall 221b, and/or the 2-3th sidewall 221c of the second housing 202.

According to an embodiment, the connector hole 243 may be omitted or may accommodate a connector (e.g., a universal serial bus (USB) connector) for transmitting and receiving power and/or data with an external electronic device. According to an embodiment (not shown), the electronic device 101 may include a plurality of connector holes 243, and some of the plurality of connector holes 243 may function as connector holes for transmitting/receiving audio signals with an external electronic device. In the illustrated embodiment, the connector hole 243 is disposed in the second housing 202, but is not limited thereto. For example, the connector hole 243 or a connector hole not shown may be disposed in the first housing 201.

According to an embodiment, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole or may include a speaker without the speaker hole 247a (e.g., a piezo speaker). According to an embodiment, the speaker hole 247a and the microphone hole 247b may be positioned in the first housing 201 and/or the second housing 202.

According to an embodiment, the camera modules 249a and 249b may include a first camera module 249a (e.g., front camera) and/or a second camera module 249b (e.g., rear camera). According to an embodiment, the electronic device 101 may include at least one of a wide-angle camera, a telephoto camera, or a close-up camera. According to an embodiment, the electronic device 200 may measure the distance to the subject by including an infrared projector and/or an infrared receiver. The camera modules 249a and 249b may include one or more lenses, an image sensor, and/or an image signal processor. The first camera module 249a may be positioned to face the same direction (e.g., the +Z direction of FIG. 4) as the display 203. For example, the first camera module 249a may be disposed in an area around the first display area A1 or overlapping the display 203. When disposed in the area overlapping the display 203, the first camera module 249a may capture the subject through the display 203. According to an embodiment, the first camera module 249a may include an under display camera (UDC) that has a screen display area (e.g., the first display area A1) that may not be visually exposed but hidden. According to an embodiment, the second camera module 249b may capture the subject in a direction (e.g., the -Z direction of FIG. 4) opposite to the first display area A1. According to an embodiment, the first camera module 249a and/or the second camera module 249b may be disposed on the second housing 202. According to an embodiment, a plurality of second camera modules 249b may be formed to provide various arrays. For example, the plurality of second camera modules 249b may be arranged along a width direction (X-axis direction) that is substantially perpendicular to the sliding direction (e.g., Y-axis direction) of the electronic device 101. As another example, the plurality of second camera modules 249b may be arranged along the sliding direction (e.g., Y-axis direction) of the electronic device 101. As another example, the plurality of second camera modules 249b may be arranged along N * M rows and columns like a matrix.

According to an embodiment, the second camera module 249b is not visually exposed to the outside of the electronic device 101 in the slide-in state of the electronic device 101 and, in the slide-out state of the electronic device 101, may capture the outside of the electronic device 101. According to an embodiment, the second camera module 249b may capture the outside of the electronic device 101 in the slide-in state and/or slide-out state of the electronic device 101. For example, at least a portion (e.g., the first rear plate 215 and/or the second rear plate 225 of FIG. 4) of the housing 210 may be substantially transparent. The second camera module 249b may capture the outside of the electronic device 101 through the first rear plate 215 and/or the second rear plate 225. According to an embodiment, the second camera module 249b may be visually exposed to the outside of the electronic device 101 to capture the outside of the electronic device 101 in the slide-in state and slide-out state of the electronic device 101. For example, the first housing 201 (e.g., the first rear plate 215 of FIG. 4) may include an opening 201a for the second camera module 249b.

According to an embodiment, an indicator (not shown) of the electronic device 101 may be disposed on the first housing 201 or the second housing 202, and the indicator may include a light emitting diode to provide state information about the electronic device 101 as a visual signal. The sensor module 261a or 261b of the electronic device 101 may produce an electrical signal or data value corresponding to the internal operation state or external environment state of the electronic device. The sensor module 261a or 261b may include a proximity sensor, a fingerprint sensor, and/or a biometric sensor (e.g., an iris/face recognition sensor or a heartrate monitor (HRM) sensor). According to an embodiment, the sensor module 261a or 261b may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. According to an embodiment, the sensor module 261a or 261b may be disposed in the first housing 201 and/or the second housing 202. The sensor modules 261a and 261b may include a first sensor module 261a (e.g., proximity sensor or illuminance sensor) disposed on the front surface of the electronic device 101 and/or a second sensor module 261b (e.g., heart rate monitoring (HRM) sensor) disposed on the rear surface of the electronic device 101.

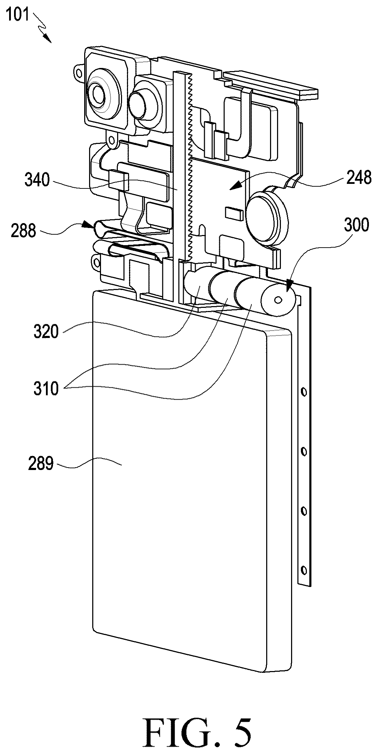

FIG. 4 is an exploded perspective view illustrating an electronic device according to an embodiment of the disclosure; Some or all of the components described with reference to FIG. 4 may be the same as all or some of the components described with reference to FIGS. 1 to 3. Some or all of the components described with reference to FIG. 4 may be the same as all or some of the components described with reference to FIGS. 5 to 36.

An electronic device 101 (e.g., the electronic device 101 of FIGS. 1 to 3) may include a first housing 201, a second housing 202, a display assembly 230, and a driving assembly 240. The configuration of the first housing 201, the second housing 202, and the display assembly 230 of FIG. 4 may be identical in whole or part to the configuration of the first housing 201, the second housing 202, and the display 203 of FIG. 2 and/or 3.

According to an embodiment, the first housing 201 may include a first cover member 211 (e.g., the first cover member 211 of FIGS. 2 and 3), a frame 213, and a first rear plate 215.

According to an embodiment, the first cover member 211 may accommodate at least a portion of the frame 213 and accommodate a component (e.g., battery 289) positioned in the frame 213. According to an embodiment, the first cover member 211 may be formed to surround at least a portion of the second housing 202. According to an embodiment, the first cover member 211 may protect the components (e.g., the second circuit board 249 and the frame 213) positioned in the first housing 201 from external impact. According to an embodiment, the second circuit board 249 electrically connected with an electric component (e.g., an actuator, a speaker, a sim socket, and/or the first circuit board 248) may be connected to the first cover member 211.

According to an embodiment, the frame 213 may be connected to the first cover member 211. For example, the frame 213 may be connected to the first cover member 211. The second housing 202 is movable relative to the first cover member 211 and/or the frame 213. According to an embodiment, the frame 213 may accommodate the battery 289. For example, the frame 213 may include a recess for receiving the battery 289. The frame 213 may be connected to the battery cover 289a and, together with the battery cover 289a, may surround at least a portion of the battery 289. According to an embodiment, the frame 213 may include a curved portion 213a facing the display assembly 230.

According to an embodiment, the first rear plate 215 may substantially form at least a portion of the exterior of the first housing 201 or the electronic device 101. For example, the first rear plate 215 may be coupled to the outer surface of the first cover member 211. According to an embodiment, the first rear plate 215 may provide a decorative effect on the exterior of the electronic device 101. The first rear plate 215 may be formed of at least one of metal, glass, synthetic resin, or ceramic.

According to an embodiment, the second housing 202 may include a second cover member 221 (e.g., the second cover member 221 of FIGS. 2 and 3), a rear cover 223, and a second rear plate 225.

According to an embodiment, the second cover member 221 may be connected to the first housing 201 through the guide rail 250 and, while being guided by the guide rail 250, reciprocate linearly in one direction (e.g., the direction of arrow (1) in FIG. 3).

According to an embodiment, the second cover member 221 may support at least a portion of the display 231. For example, the second cover member 221 may include a first surface F1. The first display area A1 of the display 231 may be substantially positioned on the first surface F1 to maintain a flat panel shape. According to an embodiment, the second cover member 221 may be formed of a metal material and/or a non-metal (e.g., polymer) material. According to an embodiment, the first circuit board 248 accommodating the electronic component (e.g., the processor 120 and/or the memory 130 of FIG. 1) may be connected to the second cover member 221. According to an embodiment, the second cover member 221 may protect the components (e.g., the first circuit board 248 and the rear cover 223) positioned in the second housing 202 from external impact.

According to an embodiment, the rear cover 223 may protect a component (e.g., the first circuit board 248) positioned on the second cover member 221. For example, the rear cover 223 may be connected to the second cover member 221 and may be formed to surround at least a portion of the first circuit board 248. According to an embodiment, the rear cover 223 may include an antenna pattern (e.g., at least one antenna element 223a) for communicating with an external electronic device. For example, when the rear cover 223 is formed of an injection molded product (e.g., an antenna carrier) of a dielectric material, the at least one antenna element 223a may be disposed on an outer surface (e.g., one surface facing in the -Z-axis direction) of the rear cover 223. For example, the at least one antenna element 223a may include a laser direct structuring (LDS) antenna pattern formed on the outer surface of the rear cover 223. For example, the at least one antenna element 223a may be formed to be embedded when the rear cover 223 is injection-molded. For example, the at least one antenna element 223a may be configured to transmit or receive wireless signals in a designated frequency band (e.g., a legacy band) by electrically connecting with a wireless communication circuit (e.g., the wireless communication module 192 of FIG. 1) disposed on the first circuit board 248.

According to an embodiment, the second rear plate 225 may substantially form at least a portion of the exterior of the second housing 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 225 may be formed of at least one of metal, glass, synthetic resin, or ceramic.

According to an embodiment, the display assembly 230 may include a display 231 (e.g., the display 203 of FIGS. 2 and/or 3) and a multi-bar structure 232 supporting the display 231. According to an embodiment, the display 231 may be referred to as a flexible display, a foldable display, and/or a rollable display. According to an embodiment, the first display area A1 of the display 231 may be supported by a rigid body. The second display area A2 may be supported by a bendable structure. For example, the first display area A1 may be supported by the first surface F1 of the second cover member 221 or a plate (not shown). The second display area A2 may be supported by the multi-bar structure 232.

According to an embodiment, the multi-bar structure 232 may be connected to or attached to at least a portion (e.g., the second display area A2) of the display 231. According to an embodiment, as the second housing 202 slides, the multi-bar structure 232 may move with respect to the first housing 201. In the slide-in state of the electronic device 101 (e.g., FIG. 2), the multi-bar structure 232 may be mostly received in the first housing 201 and may be positioned between the first cover member 211 and the second cover member 221. According to an embodiment, at least a portion of the multi-bar structure 232 may move corresponding to the curved surface 213a positioned at the edge of the frame 213. According to an embodiment, the multi-bar structure 232 may be referred to as a display supporting member or supporting structure and may be in the form of one elastic plate.

According to an embodiment, the driving assembly 240 may move the second housing 202 relative to the first housing 201. For example, the drive assembly 240 may include an actuator 241 configured to generate a driving force for sliding the second housing 202 with respect to the first housing 201. The driving assembly 240 may include a gear 244 (e.g., a pinion) connected to the actuator 241 and a rack 242 configured to mesh with the gear. FIG. 4 illustrates components (e.g., the actuator 241, the rack 242, and the gear 244) of the driving assembly 240 inverted (e.g., facing in the -Z-axis direction) in the circle P1.

According to an embodiment, the housing in which the rack 242 is positioned and the housing in which the actuator 241 is positioned may be different. According to an embodiment, the rack 242 may be connected to the first housing 201. The actuator 241 may be connected to the second housing 202. According to an embodiment of the disclosure, unlike the illustrations in FIGS. 5 to 25, the actuator 241 may be connected to the first housing 201. The rack 242 may be connected to the second housing 202.

According to an embodiment, the actuator 241 may be controlled by a processor (e.g., the processor 120 of FIG. 1). For example, the processor 120 may include an actuator driver driving circuit and transfer a pulse width modulation (PWM) signal for controlling the speed of the actuator 241 and/or the torque of the actuator 241 to the actuator 241. According to an embodiment, the actuator 241 may be electrically coupled to a processor (e.g., the processor 120 of FIG. 1) positioned on the circuit board (e.g., the first circuit board 248 of FIG. 4) using a flexible printed circuit board.

According to an embodiment, the second housing 202 may accommodate the first circuit board 248 (e.g., a main board). According to an embodiment, the processor, memory, and/or interface may be mounted on the first circuit board 248. The processor may include one or more of, e.g., a central processing unit, an application processor, a graphic processing device, an image signal processing, a sensor hub processor, or a communication processor. According to various embodiments, the first circuit board 248 may include a flexible printed circuit board type radio frequency cable (FRC). The first circuit board 248 may be disposed on at least a portion of the second cover member 221 and may be electrically connected with an antenna module (e.g., the antenna module 197 of FIG. 1) and a communication module (e.g., the communication module 190 of FIG. 1).

According to an embodiment, the memory may include, e.g., a volatile or non-volatile memory.

According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the electronic device 101 may include a second circuit board 249 (e.g., a sub circuit board) spaced apart from the first circuit board 248 (e.g., a main circuit board) in the first housing 201. The second circuit board 249 may be electrically connected to the first circuit board 248 through a flexible board. The second circuit board 249 may be electrically connected with electric components disposed in an end area of the electronic device 101, such as the battery 289 or a speaker and/or a sim socket, and may transfer signals and power. According to an embodiment, the sub circuit board 249 may receive the antenna member 271 (e.g., a coil) or connect with the antenna member 271. The antenna member 271 may include a wireless charging antenna for a wireless charging first, a near field communication (NFC) antenna for an NFC first, and/or a multi-function coil (MFC) antenna including a magnetic secure transmission (MST) antenna for performing an electronic payment first. For example, the battery 289 may receive power from an external electronic device using the antenna member 271 for wireless charging. As another example, the battery 289 may transfer power to the external electronic device using the antenna member 271 for wireless charging.

According to an embodiment, the battery 289 may be a device for supplying power to at least one component of the electronic device 101. The battery 189 may include a primary cell which is not rechargeable, a secondary cell which is rechargeable, or a fuel cell. The battery 289 may be integrally or detachably disposed inside the electronic device 101. According to an embodiment, the battery 289 may be formed of a single embedded battery or may include a plurality of removable batteries. According to various embodiments, the battery 289 may be position on the frame 213. For example, the battery 289 may be surrounded by the frame 213 and the battery cover 289a. According to an embodiment, it may be positioned within the second housing 202 and is slidable along with the second housing 202.

According to an embodiment, the guide rail 250 may guide the movement of the multi-bar structure 232. For example, the multi-bar structure 232 may slide along the slit 251 formed in the guide rail 250. According to an embodiment, the guide rail 250 may be connected to the first housing 201. For example, the guide rail 250 may be connected to the first cover member 211 and/or the frame 213. According to an embodiment, the slit 251 may be referred to as a groove or recess formed in the inner surface of the guide rail 250. FIG. 4 illustrates an enlarged guide rail 250 in the circle P2.

According to an embodiment, the guide rail 250 may provide a force to the multi-bar structure 232 based on the driving of the actuator 241.

According to an embodiment, when the electronic device 101 changes from the slide-in state to the slide-out state, at least a portion of the second housing 202 may slide to be exposed to the outside from the first housing 201 through driving of the actuator 241. For example, the gear 244 may rotate in a first rotation direction based on the driving of the actuator 241. The rack 242 may be fixed to the first housing 201, and the actuator 241 may move together with the second housing 202. The second housing 202 may slide to be exposed outside the first housing 201 based on the movement of the actuator 241 along the rack 242.

According to an embodiment, when the electronic device 101 changes from the slide-in state to the slide-out state, the inner portion 252 of the guide rail 250 may provide a force to the multi-bar structure 232. The multi-bar structure 232 receiving the force may be moved along the slit 251 of the guide rail 250, and the second housing 202 may be slid to extend relative to the first housing 201. At least a portion of the display assembly 230 accommodated between the first cover member 211 and the frame 213 may be extended to the front surface.

According to an embodiment, when the electronic device 101 changes from the slide-out state to the slide-in state, at least a portion of the second housing 202 may slide to be inserted into the first housing 201 through driving of the actuator 241. For example, the gear 244 may rotate in a second rotation direction opposite to the first rotation direction based on the driving of the actuator 241. The rack 242 may be fixed to the first housing 201, and the actuator 241 may move together with the second housing 202. The second housing 202 may slide into the inside of the first housing 201 based on the movement of the actuator 241 along the rack 242.

According to an embodiment, when the electronic device 101 changes from the slide-out state to the slide-in state, the outer portion 253 of the guide rail 250 may provide a force to the bent multi-bar structure 232. The multi-bar structure 232 receiving the force may be moved along the slit 251 of the guide rail 250, and at least a portion of the second housing 202 may be slid to be received in the first housing 201. At least a portion of the display assembly 230 may be accommodated between the first cover member 211 and the frame 213.

According to an embodiment, the electronic device 101 may be configured to stop in a designated intermediate state between the slide-in state and the slide-out state by controlling driving of the actuator 241 (free stop function). According to an embodiment, the electronic device 101 may be changed to the slide-in state, the intermediate state, or the slide-out state through the user's manipulation in the state in which the driving force is not provided to the actuator 241.

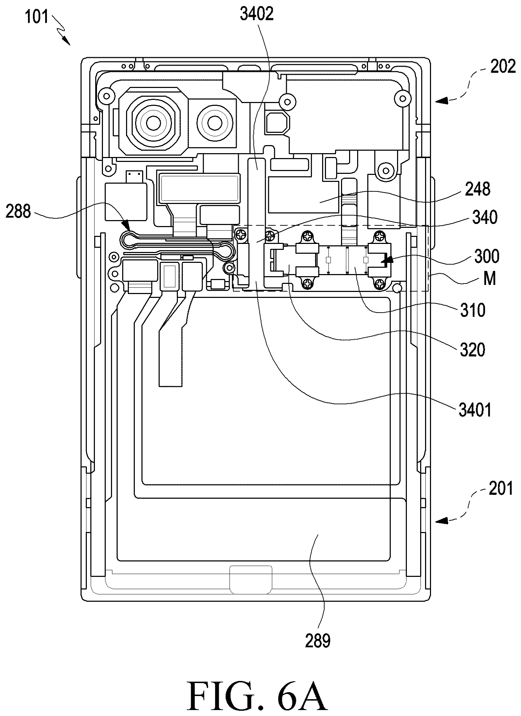

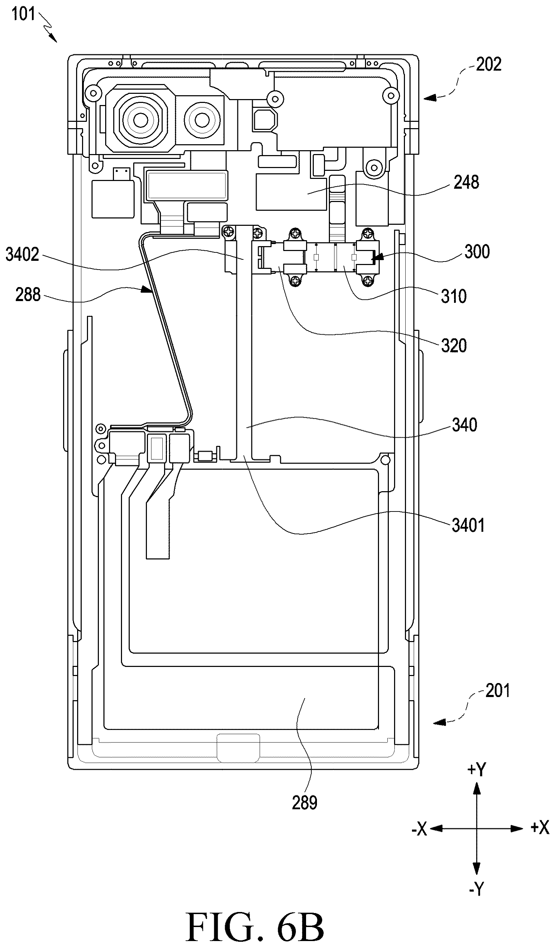

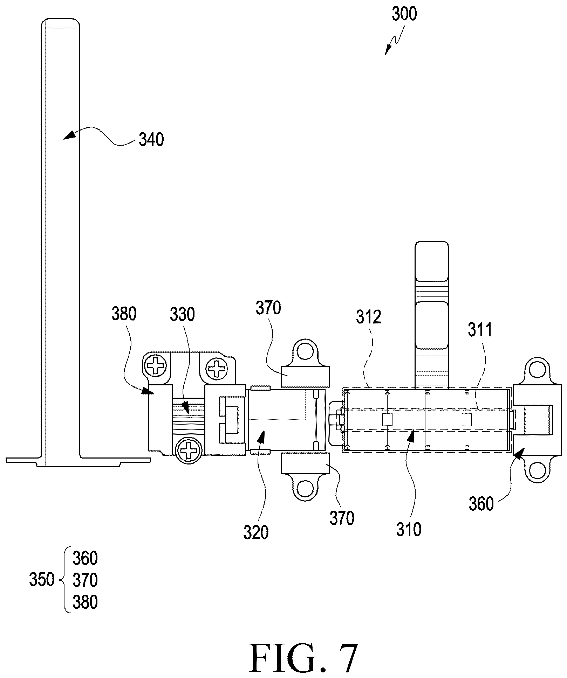

FIG. 5 is a view illustrating an electronic device 101 with some components separated. FIG. 6A is a view illustrating the structure of FIG. 5 in a first state of the electronic device 101 illustrated in FIG. 2. FIG. 6B is a view illustrating the structure of FIG. 5 in a second state of the electronic device 101 illustrated in FIG. 3. The components described with reference to FIGS. 5, 6A, and 6B may be identical in whole or part to the components described with reference to FIGS. 1 to 4. The components described with reference to FIGS. 5, 6A, and 6B may be identical in whole or part to the components described with reference to FIGS. 7 to 36.

According to an embodiment, the electronic device 101 may include a circuit board 248, a flexible circuit board 288, and a battery 289. The circuit board 248 may be the same as the first circuit board 248 described with reference to FIGS. 2 to 4. The battery 289 may be the same as the battery 289 described with reference to FIGS. 2 to 4. The circuit board 248 and the battery 289 may be disposed inside the housing (e.g., the housing 210 of FIGS. 2 to 4). The electronic device 101 may include a flexible circuit board 288. The flexible circuit board 288 may connect the circuit board 248 and the battery 289. The flexible circuit board 288 may be folded or unfolded when the second housing 202 moves with respect to the first housing 201.

According to an embodiment, the electronic device 101 may include a driving assembly 300. The description of the driving assembly 300 may be substantially the same as the description of the driving assembly 240 made with reference to FIG. 4. The driving assembly 300 may generate power for moving the housing (e.g., the housing 210 of FIGS. 2 to 4). The driving assembly 300 may move the first housing 201. The driving assembly 300 may move the second housing 202. The driving assembly 300 may move either the first housing 201 or the second housing 202. The battery 289 may supply power to the driving assembly 300. The processor 120 included in the circuit board 248 may control driving of the driving assembly 300. The driving assembly may be referred to as a "driving device 300." The driving assembly 300 may be referred to as a "motor assembly." The driving assembly 300 may be referred to as a "power transmission device." The driving assembly 300 may be referred to as a "power transmission assembly." The drive assembly 300 may be identical to the driving assembly 300 described with reference to FIGS. 7 to 36.

According to an embodiment, the driving assembly 300 may include a motor 310. The motor 310 may generate power. The motor 310 may receive power from the battery 289. The motor 310 may be referred to as a "power source".

According to an embodiment, the driving assembly 300 may include a deceleration module 320. The deceleration module 320 may be connected to the motor 310. The deceleration module 320 may be referred to as a planetary gear assembly.

According to an embodiment, the driving assembly 300 may include a pinion gear (e.g., the pinion gear 330 of FIG. 7). The pinion gear 330 may be connected to the deceleration module 320.

According to an embodiment, the electronic device 101 may include a rack gear 340 (e.g., the rack gear 340 of FIG. 7). The rack gear 340 may be connected to the driving assembly 300. The rack gear 340 may be connected to the pinion gear 330. For example, the rack gear 340 may be engaged with a pinion gear (e.g., the pinion gear 330 of FIG. 7).

According to an embodiment, the rotational power generated by the motor 310 may be transferred to the deceleration module 320. The deceleration module 320 may reduce the revolutions per minute (RPM) of the rotational power generated by the motor 310. The deceleration module 320 may increase the torque of the rotational power generated by the motor 310. The deceleration module 320 may improve the torque of the rotational power generated in the motor 310 and transfer the torque to the pinion gear (e.g., the pinion gear 330 of FIG. 7). The pinion gear 330 may be engaged with the rack gear 340. The pinion gear 330 may linearly move along the rack gear 340 by the rotational power transferred to the pinion gear 330. The rack gear 340 may be fixed to the first housing 201, and the pinion gear 330 may be fixed to the second housing 202. When the pinion gear 330 linearly moves along the rack gear 340, the second housing 202 may linearly move together with the pinion gear 330. When the pinion gear 330 linearly moves along the rack gear 340, the second housing 202 may move with respect to the first housing 201. When the rack gear 340 engages with the pinion gear 330 to linearly move, the first housing 201 may linearly move with the rack gear 340. When the rack gear 340 is engaged with the pinion gear 330 to move linearly, the first housing 201 may move with respect to the second housing 202.

Referring to FIG. 6A, as illustrated in FIG. 2, at least a portion of the second housing 202 may be in a state of being retracted into the first housing 201 (e.g., in a slide-in state). The state of the electronic device 101 illustrated in FIGS. 2 and 6A may be defined as a "first state". In the first state of the electronic device 101, the pinion gear (e.g., the pinion gear 330 of FIG. 7) may be positioned further adjacent to the first end portion 3401 than the second end portion 3402 of the rack gear 340 (e.g., the rack gear 340 of FIG. 7).

Referring to FIG. 6B, as illustrated in FIG. 3, at least a portion of the second housing 202 may be drawn out of the first housing 201 (e.g., in a slide-out state). The state of the electronic device 101 illustrated in FIGS. 3 and 6B may be defined as a "second state". In the second state of the electronic device 101, the pinion gear (e.g., the pinion gear 330 of FIG. 7) may be positioned further adjacent to the second end portion 3402 than the first end portion 3401 of the rack gear 340 (e.g., the rack gear 340 of FIG. 7).

Referring to FIGS. 6A and 6B, when the electronic device 101 changes from the first state to the second state, the motor 310, the deceleration module 320, and the pinion gear (e.g., the pinion gear device 330 of FIG. 7) may move along the rack gear 340 (e.g., the rack gear 340 of FIG. 7). When the electronic device 101 changes from the first state to the second state, the motor 310, the deceleration module 320, and the pinion gear 330 may move from the first end portion 3401 of the rack gear 340 toward the second end portion 3402.

Referring to FIGS. 6A and 6B, when the electronic device 101 changes from the first state to the second state, the rack gear 340 may be engaged with the pinion gear 330 to move together with the first housing 201. When the electronic device 101 changes from the first state to the second state, the rack gear 340 may move so that the positions of other components of the driving assembly 300 (e.g., the motor 310, the deceleration module 320, and the pinion gear 330) change from the first end portion 3401 to the second end portion 3402.

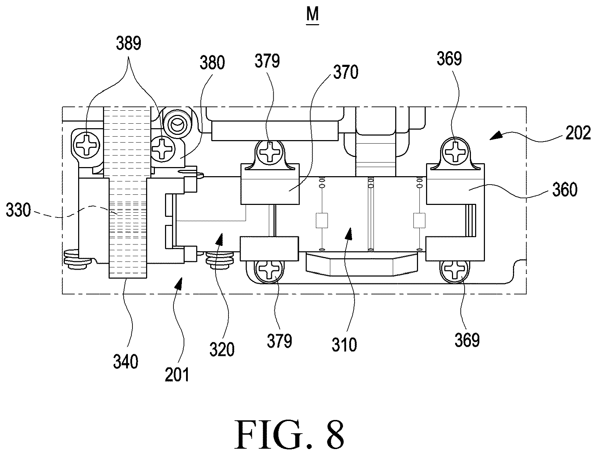

FIG. 7 is a view illustrating the driving assembly 300. Some or all of the components described with reference to FIG. 7 may be the same as all or some of the components described with reference to FIGS. 1 to 6B. Some or all of the components described with reference to FIG. 7 may be the same as all or some of the components described with reference to FIGS. 8 to 36.

According to an embodiment, the driving assembly 300 may generate power to move the first housing (e.g., the first housing 201 of FIGS. 6A and 6B) or the second housing (e.g., the second housing 202 of FIGS. 6A and 6B).

According to an embodiment, the driving assembly 300 may include a motor 310. The motor 310 may generate power. The motor 310 may include a shaft 311 and an actuator 312. The shaft 311 may be rotated by the actuator 312.

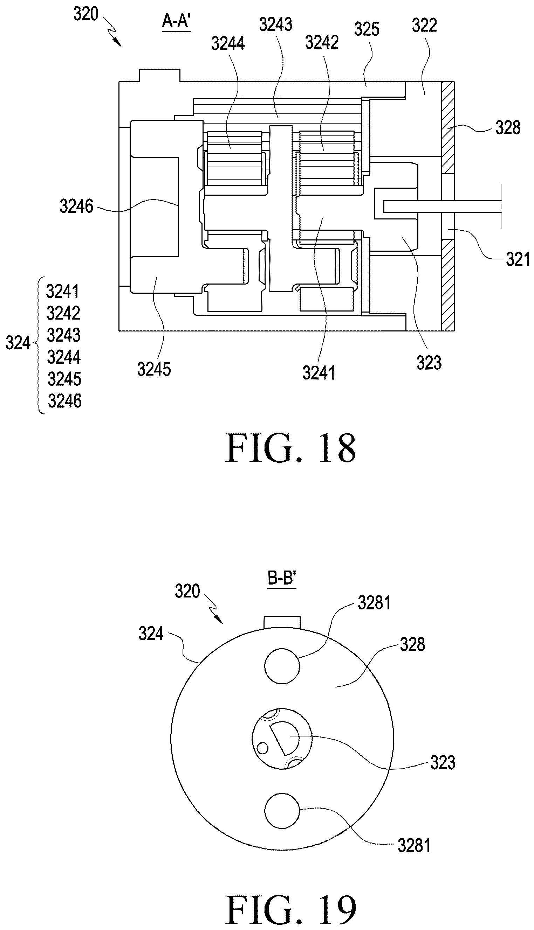

According to an embodiment, the driving assembly 300 may include a deceleration module 320. The deceleration module 320 may be connected to the motor 310. The shaft 311 may be connected to the deceleration module 320. The shaft 311 may be rotatably connected to a deceleration gear portion (e.g., the deceleration gear portion 324 of FIG. 18) of the deceleration module 320. The deceleration module 320 may adjust the magnitude of the power transferred from the motor 310. For example, the deceleration module 320 may adjust the magnitude of the torque of the power transferred through the shaft 311 and transfer it to the pinion gear 330. For example, the deceleration module 320 may adjust the rotational speed (rpm) of the pinion gear 330 to a speed lower than the rotational speed (rpm) of the shaft 311. The deceleration gear portion 324 may adjust the torque and rotational speed (rpm) of the power transferred from the shaft 311 and transfer the same to the pinion gear 330.

According to an embodiment, the driving assembly 300 may include a pinion gear 330. The pinion gear 330 may be connected to the deceleration module 320. The pinion gear 330 may receive power generated from the motor 310 through the deceleration module 320.

According to an embodiment, the driving assembly 300 may include a rack gear 340. The rack gear 340 may be engaged with the pinion gear 330. The rack gear 340 may be engaged with the pinion gear 330 to linearly move in a direction in which the first housing 201 and the second housing 202 move relative to each other.

According to an embodiment, the driving assembly 300 may include a fixing member 350. The fixing member 350 may support at least one of the motor 310, the deceleration module 320, and the pinion gear 330. The fixing member 350 may include a first fixing member 360 supporting the motor 310. The fixing member 350 may include a second fixing member 370 supporting the deceleration module 320. The fixing member 350 may include a third fixing member 380 which supports the pinion gear 330.

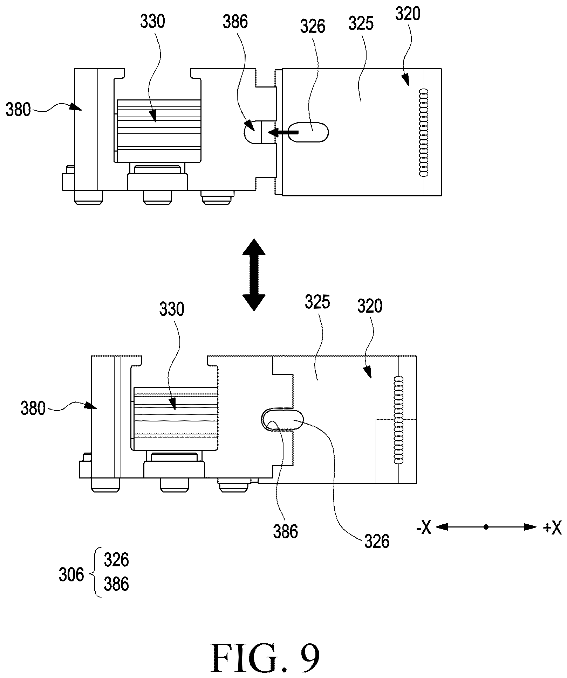

FIG. 8 is an enlarged view illustrating the area M illustrated in FIG. 6A. Some or all of the components described with reference to FIG. 8 may be the same as those described with reference to FIGS. 1 to 7. The components described with reference to FIG. 8 may be identical in whole or part to the components described with reference to FIGS. 9 to 36.

According to an embodiment, the motor 310, the deceleration module 320, and the pinion gear 330 may be fixed to the second housing 202. The motor 310, the deceleration module 320, and the pinion gear 330 may move together with the second housing 202.

According to an embodiment, the rack gear 340 may be fixed to the first housing 201. The rack gear 340 may move together with the first housing 201.

According to an embodiment, the first housing 201 and the second housing 202 may be moved relative to each other. For example, the first housing 201 may move with respect to the second housing 202, and the second housing 202 may move with respect to the first housing 201. The rack gear 340 may move relative to the pinion gear 330. For example, the rack gear 340 may move together with the first housing 201 with respect to the pinion gear 330, and the pinion gear 330 may move together with the second housing 202 with respect to the rack gear 340.

According to an embodiment, the first fixing member 360 may fix the motor 310 to the second housing 202. The driving assembly 300 may include a first fastening member 369 for coupling the first fixing member 360 and the second housing 202. The first fastening member 369 may be a releasable fastener.

According to an embodiment, the second fixing member 370 may fix the deceleration module 320 to the second housing 202. The driving assembly 300 may include a second fastening member 379 for coupling the second fixing member 370 and the second housing 202. The second fastening member 379 may be a releasable fastener.

According to an embodiment, the third fixing member 380 may fix the pinion gear 330 to the second housing 202. The driving assembly 300 may include a third fastening member 389 for coupling the third fixing member 380 and the second housing 202. The third fastening member 389 may be a releasable fastener.

Directions for describing the electronic device 101 according to an embodiment of the disclosure are defined. A first direction may be defined. The first direction may be defined as a direction (e.g., the +Y direction illustrated in FIG. 6A) in which the second housing 202 moves with respect to the first housing 201. However, the first direction may be a direction (e.g., the -Y direction illustrated in FIG. 6a) in which the first housing 201 moves with respect to the second housing 202. A second direction may be defined. The second direction may be defined as a direction in which components constituting the driving assembly 300 are assembled or disassembled. For example, the second direction may be a direction (e.g., +X or -X direction) in which the motor 310, the deceleration module 320, and the third fixing member 380 are assembled or disassembled from each other. The second direction may be perpendicular to the first direction. A third direction may be defined. The third direction may be a direction opposite to the second direction. For example, when the second direction is the +X direction, the third direction may be the -X direction. However, the expressions of ordinal numbers (e.g., "first", "second", and "third") used to define the first, second, and third directions are used to distinguish between directions and do not limit the directions defined by specific directions. For example, "second direction" may be referred to as "first direction", and "third direction" may be referred to as "second direction".

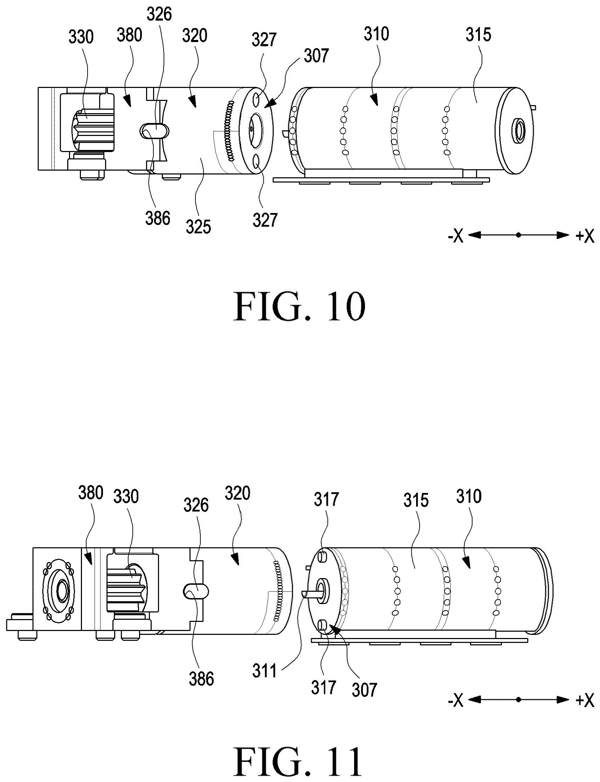

FIG. 9 is a view illustrating assembly and disassembly of a deceleration module 320 and a third fixing member 380. Some or all of the components described with reference to FIG. 9 may be the same as all or some of the components described with reference to FIGS. 1 to 8. Some or all of the components described with reference to FIG. 9 may be the same as all or some of the components described with reference to FIGS. 10 to 36.

According to an embodiment, the deceleration module 320 may be separated from the third fixing member 380 in the second direction (e.g., the +X direction). The deceleration module 320 may be assembled in the third direction (e.g., the -X direction) toward the third fixing member 380. The third fixing member 380 may be separated from the deceleration module 320 in the third direction. The third fixing member 380 may be assembled in the second direction toward the deceleration module 320.

According to an embodiment, the deceleration module 320 may include a second case 325. A space may be formed inside the second case 325. The deceleration gear portion (e.g., the deceleration gear portion 324 of FIG. 18) may be disposed in the second case 325. The deceleration module 320 may include a second protrusion 326. The second protrusion 326 may protrude to the outside of the second case 325. The second protrusion 326 may protrude toward the third fixing member 380. The second protrusion 326 may be configured to be inserted into at least a portion of the third fixing member 380.

According to an embodiment, the third fixing member 380 may support the pinion gear 330. The third fixing member 380 may be disposed to surround at least a portion of the pinion gear 330.

According to an embodiment, the third fixing member 380 may include a recess 386. The recess 386 may face the deceleration module 320. The second protrusion 326 may be configured to be inserted into the recess 386.

According to an embodiment, the deceleration module 320 may be assembled to the third fixing member 380 as the second protrusion 326 is inserted into the recess 386. The deceleration module 320 may be separated from the third fixing member 380 as the second protrusion 326 is removed from the recess 386. The second protrusion 326 may be removed from the recess 386 in the second direction (e.g., the +X direction). The second protrusion 326 may be inserted into the recess 386 in the third direction (e.g., the -X direction).

According to an embodiment, the driving assembly 300 may include a second coupling structure 306. The second coupling structure 306 may include a second protrusion 326 and a recess 386. The second coupling structure 306 may be a structure for coupling the deceleration module 320 and the third fixing member 380. The second coupling structure 306 may refer to a second protrusion 326 inserted into the recess 386.

The second protrusion 326 of the driving assembly 300 according to an embodiment of the disclosure may protrude from the third fixing member 380. The recess 386 of the driving assembly 300 according to an embodiment of the disclosure may be formed in the second case 325.

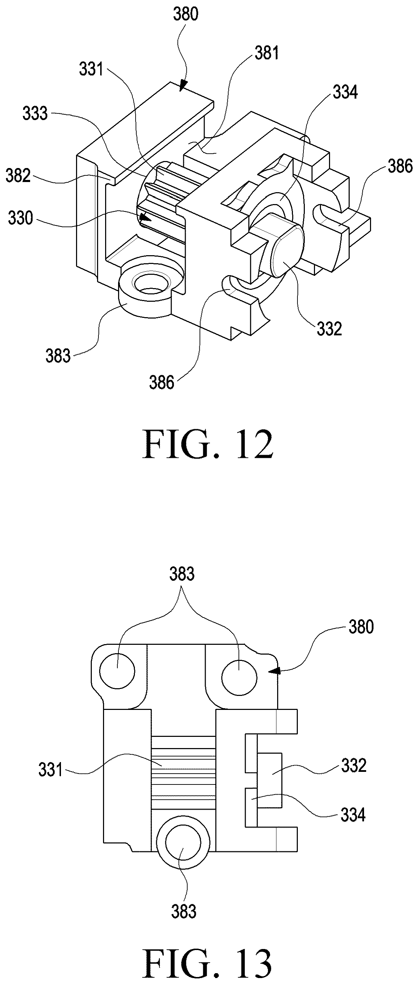

FIG. 10 is a view illustrating assembly of a motor 310 and a deceleration module 320. FIG. 11 is a view of the structure illustrated in FIG. 10 viewed from a different angle from that of FIG. 10. The components described with reference to FIGS. 10 and 11 may be identical in whole or part to the components described with reference to FIGS. 1 to 9. Some or all of the components described with reference to FIGS. 10 and 11 may be the same as all or some of the components described with reference to FIGS. 12 to 36.

According to an embodiment, the motor 310 may be separated from the deceleration module 320 in the second direction (e.g., the +X direction). The motor 310 may be assembled in the third direction (e.g., the -X direction) toward the deceleration module 320. The deceleration module 320 may be separated from the motor 310 in the third direction. The deceleration module 320 may be assembled in the second direction toward the motor 310.

According to an embodiment, the motor 310 may include a first case 315. A space may be formed inside the first case 315. The shaft 311 and the actuator (e.g., the actuator 312 of FIG. 7) may be disposed inside the first case 315. The motor 310 may include a first protrusion 317. The first protrusion 317 may protrude to the outside of the first case 315. The first protrusion 317 may protrude toward the deceleration module 320. The first protrusion 317 may be configured to be inserted into at least a portion of the deceleration module 320.

According to an embodiment, the deceleration module 320 may include an insertion hole 327. The insertion hole 327 may face the motor 310. The first protrusion 317 may be configured to be inserted into the insertion hole 327.

According to an embodiment, the motor 310 may be assembled to the deceleration module 320 as the first protrusion 317 is inserted into the insertion hole 327. The motor 310 may be separated from the deceleration module 320 as the first protrusion 317 is removed from the insertion hole 327. The first protrusion 317 may be removed from the insertion hole 327 in the second direction (e.g., the +X direction). The first protrusion 317 may be inserted into the insertion hole 327 in the third direction (e.g., the -X direction).

According to an embodiment, the driving assembly 300 may include a first coupling structure 307. The first coupling structure 307 may include a first protrusion 317 and an insertion hole 327. The first coupling structure 307 may be a structure for coupling the motor 310 and the deceleration module 320. The first coupling structure 307 may mean a first protrusion 317 inserted into the insertion hole 327.

The first protrusion 317 of the driving assembly 300 according to an embodiment of the disclosure may protrude from the second case 325. The insertion hole 327 of the driving assembly 300 according to an embodiment of the disclosure may be formed in the first case 315.

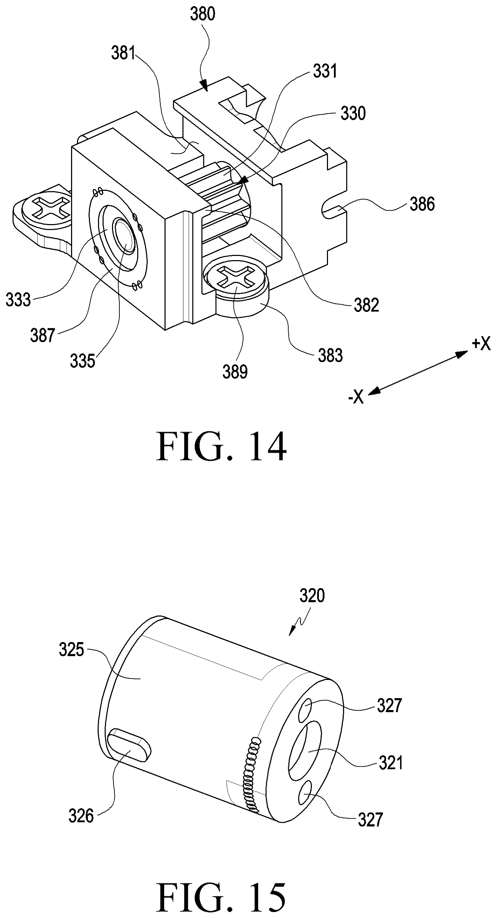

FIG. 12 is a view illustrating a pinion gear 330 and a third fixing member 380. FIG. 13 is a side view of the structure of FIG. 12. FIG. 14 is a view of the structure illustrated in FIG. 12 viewed from a different angle from that of FIG. 12. Some or all of the components described with reference to FIGS. 12 to 14 may be the same as the components described with reference to FIGS. 1 to 13. Some or all of the components described with reference to FIGS. 12 to 14 may be the same as all or some of the components described with reference to FIGS. 15 to 36.

According to an embodiment, the third fixing member 380 may surround a portion of the pinion gear 330. The third fixing member 380 may surround a portion of the rack gear (e.g., the rack gear 340 of FIG. 7). The pinion gear 330 and the rack gear 340 may be engaged with each other inside the third fixing member 380.

According to an embodiment, the third fixing member 380 may include a recess 386. The second protrusion (e.g., the second protrusion 326 of FIGS. 9 to 11) of the deceleration module (e.g., the deceleration module 326 of FIGS. 9 to 11) may be inserted into the recess 386.

According to an embodiment, the third fixing member 380 may include an engagement space 381. The pinion gear 330 and the rack gear 340 may be engaged in the engagement space 381. The pinion gear 330 may include an engagement portion 331. The engagement portion 331 may be positioned in the engagement space 381. The engagement portion 331 may be engaged with the rack gear 340.

According to an embodiment, the third fixing member 380 may include a stopper 382. The stopper 382 may protrude toward the engagement space 381. The rack gear 340 may be caught by the stopper 382. The stopper 382 may prevent the rack gear 340 from being separated to the outside of the engagement space 381.

According to an embodiment, the third fixing member 380 may include a fastening rib 383. The third fastening member 389 may be inserted into the fastening rib 383.

According to an embodiment, the pinion gear 330 may include an engagement portion 331 and a gear shaft 332. The engagement portion 331 may be engaged with the rack gear 340. The gear shaft 332 may be engaged with the deceleration gear portion (e.g., the deceleration gear portion 324 of FIG. 18) of the reduction module (e.g., the deceleration module 320 of FIG. 18).

According to an embodiment, the pinion gear 330 may include gear bearings 333 and 334. At least a portion of the gear bearings 333 and 334 may be positioned between the pinion gear 330 and the third fixing member 380.

According to an embodiment, the pinion gear 330 may include an end portion of the gear 335. The gear bearing 333 may surround the end portion 335 of the gear. The third fixing member 380 may include a support rim 387. The support rim 387 may face the end portion 335 of the gear and the gear bearing 333. The inner diameter of the support rim 387 may be smaller than the outer diameter of the end portion 335 of the gear. The inner diameter of the support rim 387 may be smaller than the outer diameter of the gear bearing 333. The support 387 may prevent the pinion gear 330 from being separated from the third fixing member 380. For example, the gear end portion 335 of the pinion gear 330 may be inserted into the gear bearing 333, and the outer diameter of the gear bearing 333 into which the gear end portion 335 is inserted is larger than the inner diameter of the support rim 387, preventing it from coming out of the support rim 387.

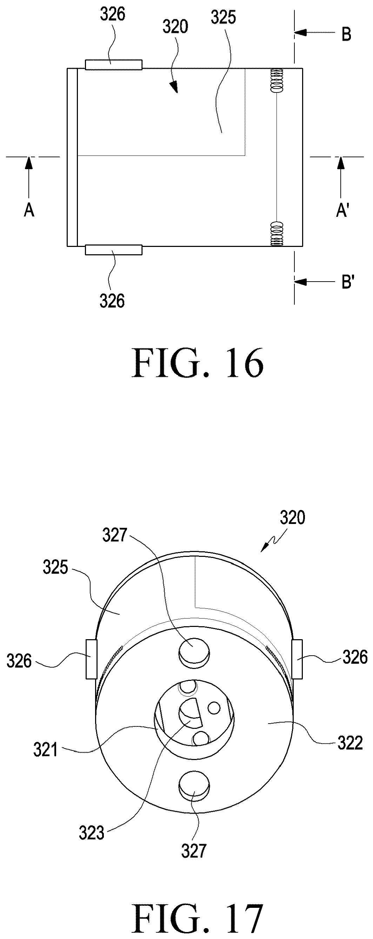

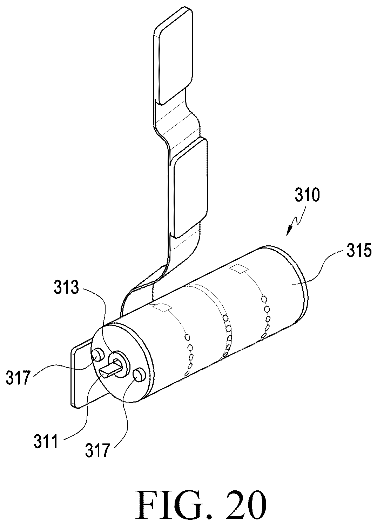

FIG. 15 is a view illustrating a deceleration module 320. FIG. 16 is a side view illustrating a deceleration module 320. FIG. 17 is a view of the deceleration module as viewed from a different angle from that of FIG. 15. FIG. 18 is a cross-sectional view taken along reference line A-A' of FIG. 16. FIG. 19 is a cross-sectional view taken along reference line B-B' of FIG. 16. Some or all of the components described with reference to FIGS. 15 to 19 may be the same as the components described with reference to FIGS. 1 to 14. Some or all of the components described with reference to FIGS. 15 to 19 may be the same as all or some of the components described with reference to FIGS. 20 to 36.

According to an embodiment, the deceleration module 320 may include a second protrusion 326 configured to be insertable into the second case 325 and the third fixing member (e.g., the third fixing member 380 of FIGS. 9 to 11). The deceleration module 320 may include an insertion hole 327 configured to allow a portion of a motor (e.g., the motor 310 of FIGS. 10 and 11) to be inserted thereinto.

According to an embodiment, the deceleration module 320 may include a shaft hole 321 configured to allow the shaft 311 of the motor 310 to be inserted thereinto. The insertion hole 327 may be positioned outside the shaft hole 321 in the radial direction.

According to an embodiment, the deceleration module 320 may include a flange 322. The flange 322 may face the motor 310. The shaft hole 321 may be formed to be open inside the flange 322. The insertion hole 327 may be formed to be open in the flange 322.

According to an embodiment, the deceleration module 320 may include a shaft insertion portion 323. The shaft insertion portion 323 may be positioned inside the shaft hole 321. The shaft insertion portion 323 may be a portion of the deceleration gear portion 324. The shaft 311 of the motor 310 may be fixed to the shaft insertion portion 323. The shaft insertion portion 323 may have a shape corresponding to the shaft 311 of the motor 310. For example, the shape of the shaft insertion portion 323 may have a "D" shape.

According to an embodiment, the deceleration module 320 may include a deceleration gear portion 324. The deceleration gear portion 324 may connect the shaft 311 of the motor 310 to the pinion gear 330. The deceleration gear portion 324 may adjust the rotational speed (rpm) of the shaft 311. The deceleration gear portion 324 may adjust the torque of the power transferred from the motor 310.

According to an embodiment, the deceleration gear portion 324 may include a shaft insertion portion 323 into which the shaft 311 of the motor 310 is inserted. The deceleration gear portion 324 may include a sun gear 3241. The sun gear 3241 may be rotatably coupled to the shaft 311. The deceleration gear portion 324 may include planet gears 3242 and 3244. The planet gears 3242 and 3244 may move along the circumference of the sun gear 3241. The deceleration gear portion 324 may include a ring gear 3243. The ring gear 3243 may be spaced apart from the sun gear 3241 in the radial direction. The planet gears 3242 and 3244 may be disposed between the sun gear 3241 and the ring gear 3243. The planet gears 3242 and 3244 may be engaged with the sun gear 3241 and the ring gear 3243, respectively. The planet gears 3242 and 3244 may revolve around the sun gear 3241. The deceleration gear portion 324 may include a carrier 3245. The carrier 3245 may be rotatably coupled to the pinion gear 330. The deceleration gear portion 324 may include a gear shaft insertion portion 3246. A gear shaft (e.g., a gear shaft 332 of FIG. 9) of the pinion gear 330 may be inserted into the gear shaft insertion portion 3246. The power transferred from the shaft 311 of the motor 310 may be transferred to the pinion gear 330 in a state in which the rotational speed and the torque are adjusted through the deceleration gear portion 324.

According to an embodiment, the deceleration module 320 may include a fence 328. The fence 328 may be coupled to the flange 322. The fence 328 may cover at least a portion of the shaft hole 321. The inner diameter of the fence 328 may be smaller than the outer diameter of the deceleration gear portion 324. For example, the inner diameter of the fence 328 may be smaller than the outer diameter of the sun gear 3211. The fence 328 may prevent the deceleration gear portion 324 from coming out of the deceleration module 320. The shaft insertion portion 323 may be exposed to the outside of the fence 328.

According to an embodiment, the fence 328 may include a fence hole 3281. The fence hole 3281 may be positioned to correspond to the first protrusion (e.g., the first protrusion 317 of FIGS. 10 and 11) of the motor 310. The first protrusion 317 of the motor 310 may pass through the fence hole 3281. The fence hole 3281 may be positioned to correspond to the insertion hole 327 of the deceleration module 320. The first protrusion 317 of the motor 310 may be inserted into the insertion hole 327 through the fence hole 3281.

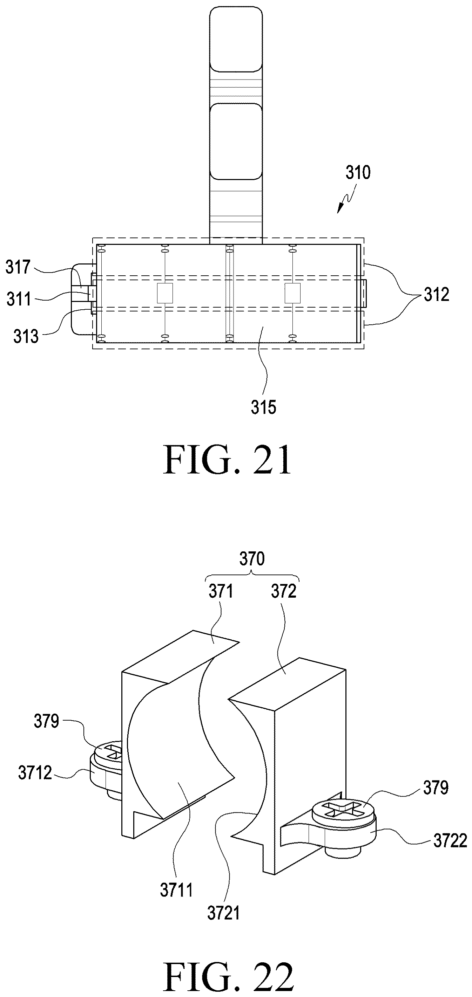

FIG. 20 is a view illustrating a motor 310. FIG. 21 is a side view illustrating a motor 310. The components described with reference to FIGS. 20 and 21 may be identical in whole or part to the components described with reference to FIGS. 1 to 19. Some or all of the components described with reference to FIGS. 20 and 21 may be the same as all or some of the components described with reference to FIGS. 22 to 36.

According to an embodiment, the motor 310 may include a first case 315 and a first protrusion 317. The motor 310 may include a shaft 311 and a motor bearing 313. The motor bearing 313 may surround the shaft 311. The first protrusion 317 may be spaced apart from the shaft 311 outward in the radial direction. The first protrusion 317 may be spaced apart from the motor bearing 313 outward in the radial direction. The motor 310 may include an actuator 312. The actuator 312 may generate power to rotate the shaft 311.

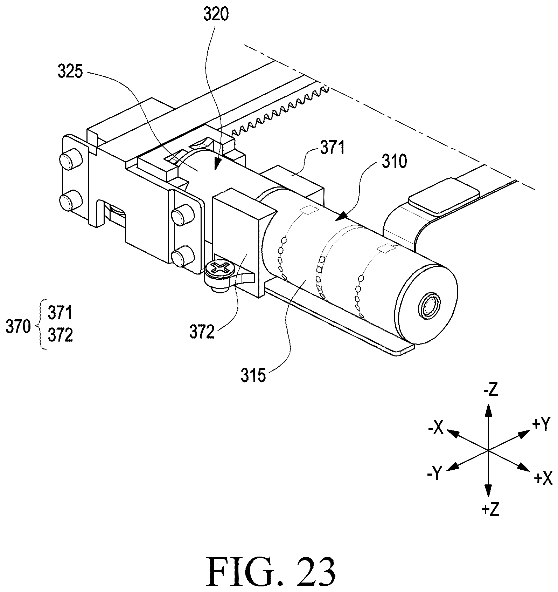

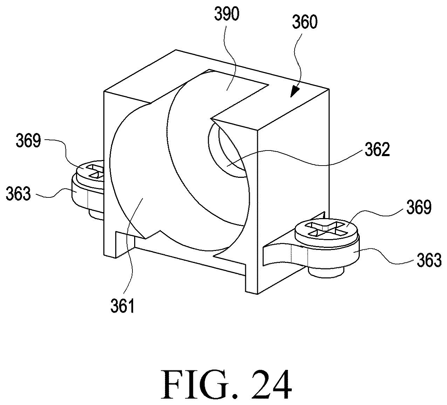

FIG. 22 is a view illustrating a second fixing member 370. FIG. 23 is a view illustrating a driving assembly 300 in a state in which a second fixing member 370 is assembled. Some or all of the components described with reference to FIGS. 22 and 23 may be the same as all or some of the components described with reference to FIGS. 1 to 21. Some or all of the components described with reference to FIGS. 22 and 23 may be the same as all or some of the components described with reference to FIGS. 24 to 36.

According to an embodiment, the second fixing member 370 may be disposed to surround a portion of the motor 310 and a portion of the deceleration module 320. The second fixing member 370 may support the motor 310 and the deceleration module 320. The second fixing member 370 may fix the motor 310 and the deceleration module 320.

According to an embodiment, the second fixing member 370 may include a 2-1th fixing member 371 and a 2-2th fixing member 372. The 2-1th fixing member 371 and the 2-2th fixing member 372 may be spaced apart from each other. A portion of the motor 310 may be positioned between the 2-1th fixing member 371 and the 2-2th fixing member 372. A portion of the deceleration module 320 may be positioned between the 2-1th fixing member 371 and the 2-2th fixing member 372.

According to an embodiment, the second fixing member 370 may include a 2-1th support surface 3711 and a 2-2th support surface 3721. The 2-1th support surface 3711 may be a portion of the inner circumferential surface of the 2-1th fixing member 371. The 2-2th support surface 3721 may be a portion of the inner circumferential surface of the 2-2th fixing member 372. The 2-1th support surface 3711 and the 2-2th support surface 3721 may face a circumferential surface of the motor 310 and the deceleration module 320.

According to an embodiment, the second fixing member 370 may include second fastening portions 3712 and 3722. The second fastening portions 3712 and 3722 may include a 2-1th fastening portion 3712 protruding from the 2-1th fixing member 371 and a 2-2th fastening portion 3722 protruding from the 2-2th fixing member 372. The second fastening member 379 may pass through the second fastening portions 3712 and 3722 to fix the second fixing member 370 to the second housing 202.

According to an embodiment, the second fixing member 370 may surround the first case 315 and the second case 325. The second fixing member 370 may limit the movement of the first case 315 and the second case 325.

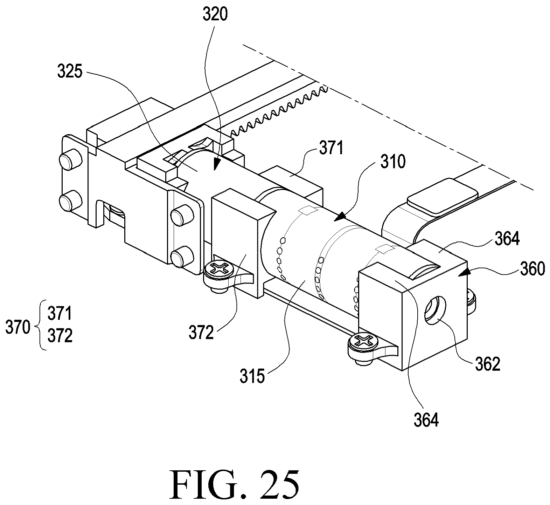

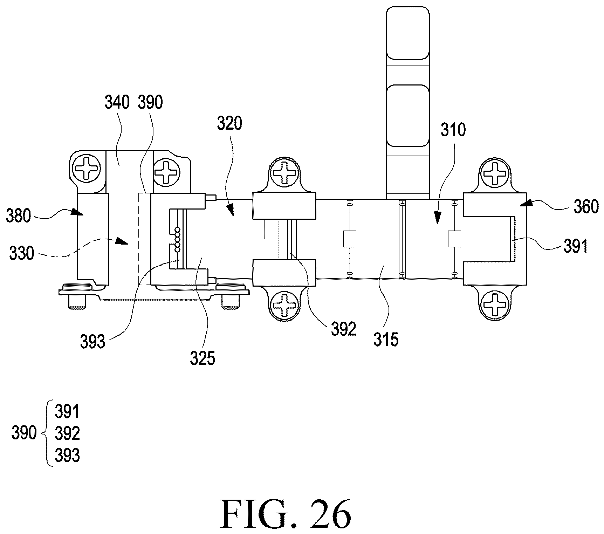

FIG. 24 is a view illustrating a first fixing member 360. FIG. 25 is a view illustrating a driving assembly 300 in a state in which a first fixing member 360 is assembled. Some or all of the components described with reference to FIGS. 24 and 25 may be the same as those described with reference to FIGS. 1 to 23. Some or all of the components described with reference to FIGS. 24 and 25 may be the same as those described with reference to FIGS. 26 to 36.

According to an embodiment, the first fixing member 360 may include a first support surface 361. The first support surface 361 may surround the motor 310. The first support surface 361 may face the first case 315. The first fixing member 360 may include a shaft through hole 362. The shaft 311 of the motor 310 may pass through the shaft through hole 362. The first fixing member 360 may include a first fastening portion 363. The first fastening member 369 may pass through the first fastening portion 363 to fix the first fixing member 360 to the second housing 202. The first fixing member 360 may include a loop 364. The loop 364 may cover a portion of the motor 310. The loop 364 may prevent the motor 310 from being separated from the first fixing member 360.

According to an embodiment, the first fixing member 360 may surround the motor 310, and the second fixing member 370 may surround the motor 310 and the deceleration module 320. The first fixing member 360 may limit the movement of the motor 310, and the second fixing member 370 may limit the movement of the motor 310 and the deceleration module 320.

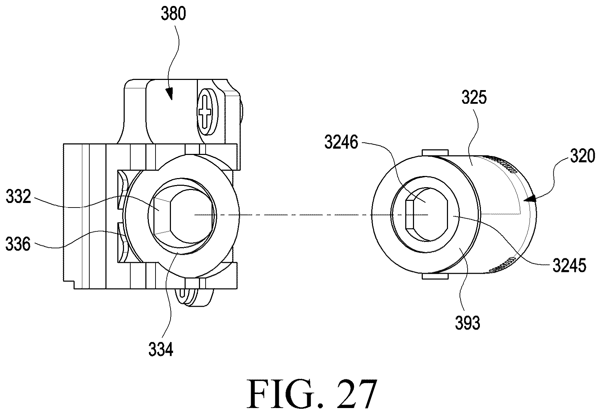

FIG. 26 is a view illustrating the driving assembly 300 in the assembled state. Some or all of the elements described with reference to FIG. 26 may be the same as those described with reference to FIGS. 1 to 25. Some or all of the components described with reference to FIG. 26 may be the same as those described with reference to FIGS. 27 to 36.

According to an embodiment, the driving assembly 300 may include a damper 390. The damper 390 may attenuate vibration generated in the driving assembly 300. The damper 390 may attenuate noise generated in the driving assembly 300. The damper 390 may include a damping material. The damper 390 may include a rubber material.

According to an embodiment, the damper 390 may be disposed between the motor 310 and the first fixing member 360. The damper 390 may be disposed between the motor 310 and the deceleration module 320. The damper 390 may be disposed between the deceleration module 320 and the third fixing member 380. The damper 390 may be disposed between the deceleration module 320 and the pinion gear 330.

According to an embodiment, the damper 390 may include a first damper 391 disposed between the motor 310 and the first fixing member 360. The first damper 390 may attenuate noise and vibration generated between the motor 310 and the first fixing member 360.

According to an embodiment, the damper 390 may include a second damper 392 disposed between the motor 310 and the deceleration module 320. The second damper 392 may attenuate noise and vibration generated between the motor 310 and the deceleration module 320.

According to an embodiment, the damper 390 may include a third damper 393 disposed between the deceleration module 320 and the third fixing member 380. The third damper 393 may attenuate noise and vibration generated between the deceleration module 320 and the third fixing member 380.

According to an embodiment, the vibration and noise generated by the motor 310 may be larger than the vibration and noise generated by the deceleration module 320 and the pinion gear 330. The thickness of the first damper 391 may be larger than the thicknesses of the second and third dampers 392 and 393. The damping force of the first damper 391 may be larger than the damping force of the second and third dampers 392 and 393.

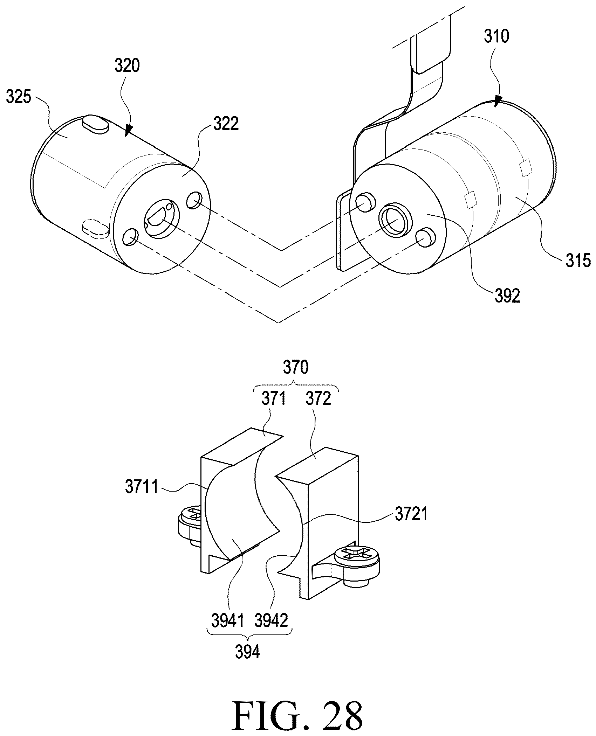

FIG. 27 is an exploded view illustrating a deceleration module 320 and a pinion gear 330. Some or all of the components described with reference to FIG. 27 may be the same as those described with reference to FIGS. 1 to 26. The components described with reference to FIG. 27 may be identical in whole or part to the components described with reference to FIGS. 28 to 36.

According to an embodiment, the third damper 393 may be disposed between the deceleration module 320 and the third fixing member 380. The third damper 393 may be disposed to surround the gear shaft 332.

According to an embodiment, the driving assembly 300 may include a seating rim 336. The seating rim 336 may surround the gear shaft 332. The seating rim 336 may surround at least a portion of the gear bearing 334. The third damper 393 may contact the seating rim 336. The seating rim 336 may include a vibration damping material. The seating rim 336 may include a rubber material.

According to an embodiment, the carrier 3245 and the gear shaft insertion portion 3246 may be exposed to an opening formed inside the third damper 393. The gear shaft 332 may be rotatably coupled to the carrier 3245 by passing through the third damper 393.

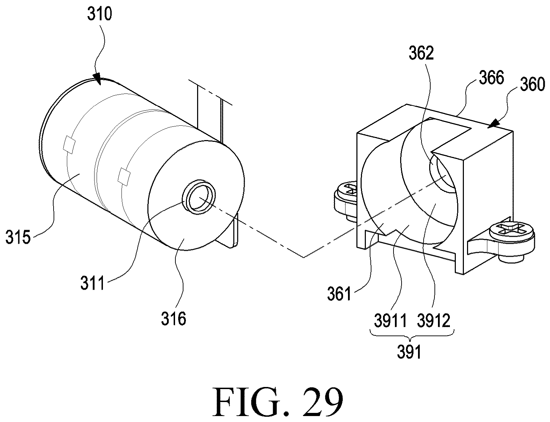

FIG. 28 is an exploded view illustrating a motor 310 and a deceleration module 320. Some or all of the components described with reference to FIG. 28 may be the same as those described with reference to FIGS. 1 to 27. The components described with reference to FIG. 28 may be identical in whole or part to the components described with reference to FIGS. 29 to 36.

According to an embodiment, the second damper 392 may be disposed between the motor 310 and the deceleration module 320. The second damper 392 may be disposed between the first case 315 and the flange 322.

According to an embodiment, the damper 390 may include a fourth damper 394. The fourth damper 394 may be coupled to the second fixing member 370. The fourth damper 394 may surround at least a portion of the motor 310. The fourth damper 394 may surround at least a portion of the deceleration module 320. The fourth damper 394 may surround the first and second cases 315 and 325.

According to an embodiment, the fourth damper 394 may include a 4-1th damper 3941 disposed on the 2-1th support surface 3711 of the 2-1th fixing member 371. The fourth damper 394 may include a 4-2th damper 3942 disposed on the 2-2th support surface 3721 of the 2-2th fixing member 372.

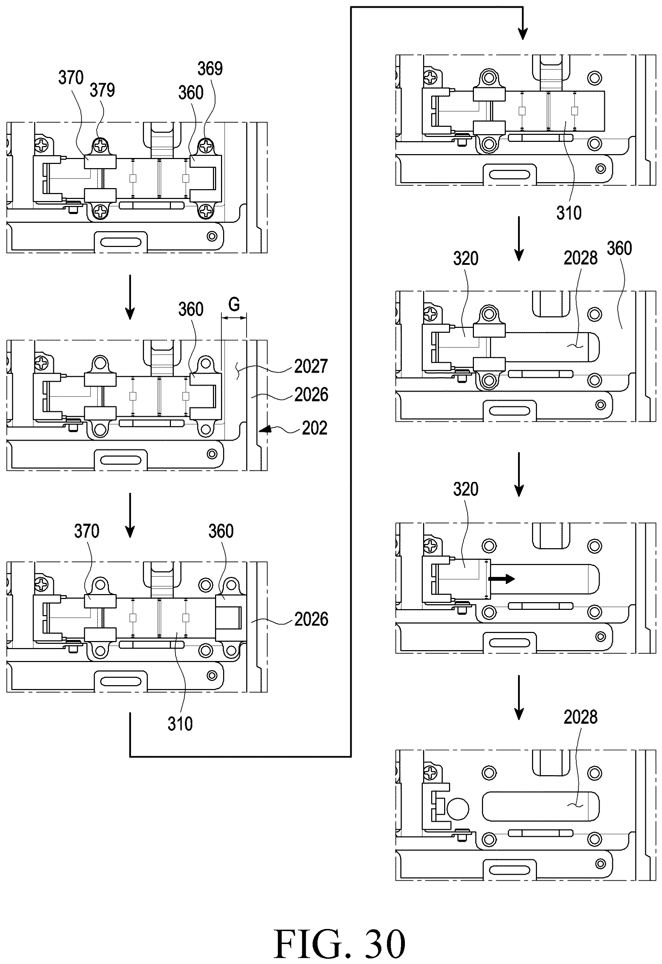

FIG. 29 is an exploded view illustrating a motor 310 and a first fixing member 360. Some or all of the components described with reference to FIG. 29 may be the same as all or some of the components described with reference to FIGS. 1 to 28. Some or all of the components described with reference to FIG. 29 may be the same as all or some of the components described with reference to FIGS. 30 to 36.

According to an embodiment, the first damper 391 may be disposed to surround the motor 310. The first damper 391 may surround the first case 315.

According to an embodiment, the first fixing member 360 may include a first support surface 361 and a shaft through hole 362. The first fixing member 360 may include a first wall 366. The shaft through hole 362 may be open in the first wall 366. The motor 310 may include a motor wall 316 facing the first wall 366.

According to an embodiment, the first damper 391 may include a first damping portion 3911 and a second damping portion 3912. The first damping portion 3911 may be disposed on the first support surface 361. The first damping portion 3911 may surround the first case 315. The second damping portion 3912 may be disposed on the first wall 366. The second damping portion 3912 may be disposed between the first wall 366 and the motor wall 316.

In the driving assembly 300 according to an embodiment of the disclosure, the components constituting the assembly (e.g., motor 310, deceleration module 320, pinion gear 330, and fixing member 350) are detachably assembled, and the damper 390 is disposed between the components 310, 320, 330, and 350, thereby reducing the vibration and noise generated in the driving assembly 300. Expressed in an alternative manner, the driving assembly 300 is modular and one or more dampers may be disposed between one or more of the modules (e.g. motor 310, deceleration module 320, pinion gear 330, and fixing member 350). This modular construction allows for individual modules to be removed and replaced, and the dampers may assist in reducing noise and vibrations that may occur as a result of the modules being releasably/detachably connected/coupled (i.e. not being integrally formed). Such a modular construction improves the repairability of the driving assembly since individual modules may be replaced if a module fails or is damaged as opposed to the entire driving assembly being required to be replaced.

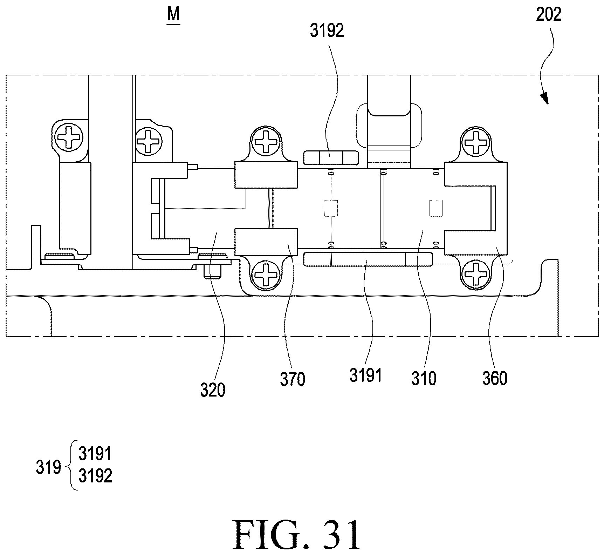

FIG. 30 is a view illustrating disassembly of a driving assembly 300 according to an embodiment of the disclosure. Some or all of the elements described with reference to FIG. 30 may be the same as those described with reference to FIGS. 1 to 29. Some or all of the components described with reference to FIG. 30 may be the same as those described with reference to FIGS. 31 to 36.

According to an embodiment, the components constituting the driving assembly 300 (e.g., the motor 310, deceleration module 320, pinion gear 330, and fixing member 350) may be separated from each other.

According to an embodiment, the electronic device 101 may include a partition wall 2026. The partition wall 2026 may be a portion of the second housing 202. The partition wall 2026 may be a portion of a frame (e.g., the frame 213 of FIG. 4). The partition wall 2026 may be spaced apart from the driving assembly 300. The partition wall 2026 may be spaced apart from the first fixing member 360. A gap G may be formed between the partition wall 2026 and the first fixing member 360. The first fixing member 360 may be disassembled from the driving assembly 300 through a space 2027 formed between the partition wall 2026 and the first fixing member 360.

According to an embodiment, after separating the first fastening member 369 from the first fixing member 360, the first fixing member 360 may be disassembled from the driving assembly 300 through the space 2027. The first fixing member 360 may move toward the partition wall 2026, and may be separated to the outside of the electronic device 101 at a position adjacent to the partition wall 2026.

According to an embodiment, after the fastening members 369 and 379 are separated from the fixing members 360 and 370, the motor 310 may be disassembled to the outside of the electronic device 101. The motor 310 may be separated from the deceleration module 320 in the manner described with reference to FIGS. 10 and 11.

According to an embodiment, the deceleration module 320 may be disassembled to the outside of the electronic device 101 through a space 2028 formed between the motor 310 and the partition wall 2026 after the motor 310 is separated.

In the driving assembly 300 according to an embodiment of the disclosure, each component (e.g., the motor 310, deceleration module 320, pinion gear 330, and fixing member 350) constituting the driving assembly 300 may be detachably assembled, so that only any one of the components (e.g., the motor 310, deceleration module 320, pinion gear 330, or fixing member 350) may be selectively replaced or repaired.

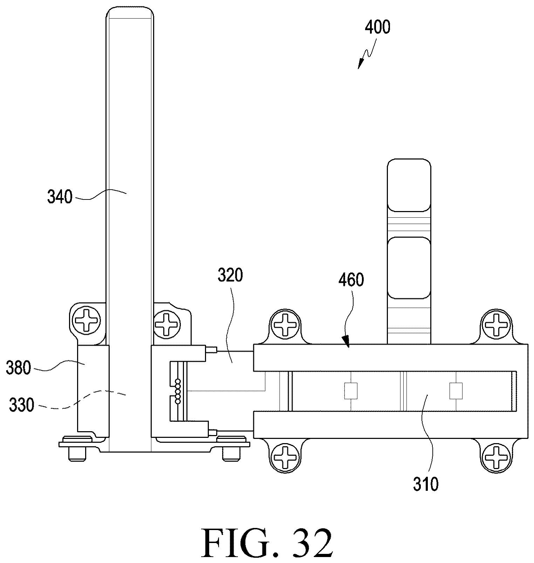

FIG. 31 is a view illustrating area M of FIG. 6A according to an embodiment. Some or all of the components described with reference to FIG. 31 may be the same as those described with reference to FIGS. 1 to 30. The components described with reference to FIG. 31 may be identical in whole or part to the components described with reference to FIGS. 32 to 36.

According to an embodiment, the driving assembly 300 may include a support wall 319. The support wall 319 may surround at least a portion of the motor 310. The support wall 319 may be disposed between the first fixing member 360 and the second fixing member 370. The support wall 319 may include a first support wall 3191 and a second support wall 3192 spaced apart from each other. The motor 310 may be positioned between the first support wall 3191 and the second support wall 3192. The support wall 319 may be positioned in the second housing 202. The support wall 319 may protrude from a portion of the second housing 202.

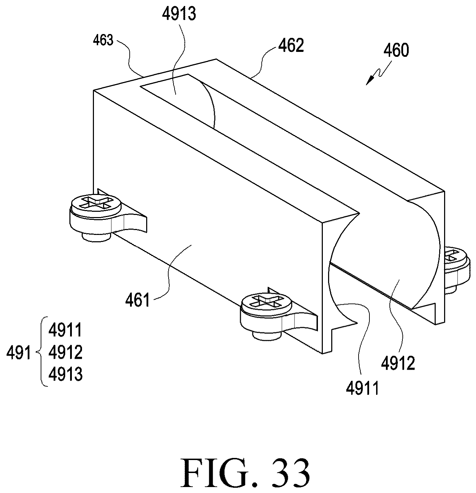

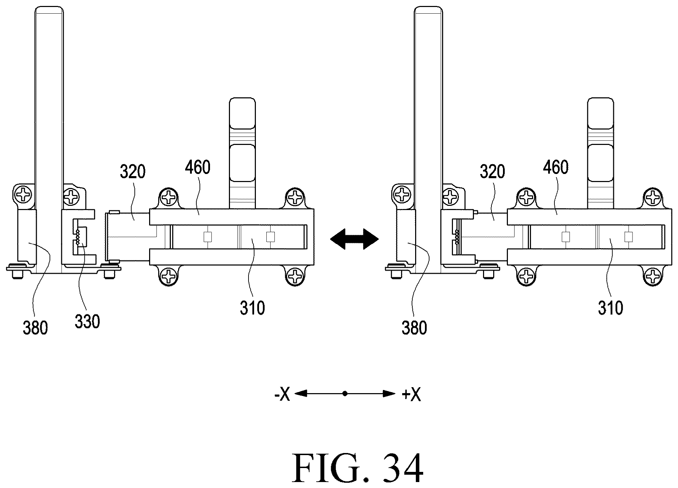

FIG. 32 is a view illustrating a driving assembly 400 according to an embodiment of the disclosure. FIG. 33 is a view illustrating the fixing member 360 of FIG. 32. FIG. 34 is a view illustrating assembly and disassembly of the driving assembly 400 of FIG. 32. Some or all of the components described with reference to FIGS. 32 to 34 may be the same as the components described with reference to FIGS. 1 to 31.

According to an embodiment, the driving assembly 400 may include a motor 310, a deceleration module 320, a pinion gear 330, a rack gear 340, and a third fixing member 380. The description of the components (e.g., the motor 310, deceleration module 320, pinion gear 330, rack gear 340, and third fixing member 380) made above with reference to FIGS. 1 to 31 may be likewise applied to the above-described components (e.g., the motor 310, deceleration module 320, pinion gear 330, rack gear 340, and third fixing member 380).

According to an embodiment, the driving assembly 400 may include a fixing member 460. The fixing member 460 may be disposed to surround the motor 310. The fixing member 460 may be disposed to surround at least a portion of the deceleration module 320.

According to an embodiment, the fixing member 460 may include a first support portion 461, a second support portion 462, and a third support portion 463. The first support portion 461 and the second support portion 462 may surround the circumferential surface of the motor 310. The third support portion 463 may connect the first support portion 461 and the second support portion 462.

According to an embodiment, the driving assembly 400 may include a damper 491. The damper 491 may include a first damping portion 4911 disposed in the first support portion 461, a second damping portion 4912 disposed in the second support portion 462, and a third damping portion 4913 disposed in the third support portion 463.

According to an embodiment, the third support portion 463 may include a shaft through hole (e.g., the shaft through hole 362 of FIG. 29). The third damping portion 4913 may include a hole corresponding to the shaft through hole 362.

According to an embodiment, the motor 310 and the deceleration module 320 may be separated from the pinion gear 330 while surrounded by the fixing member 460. The motor 310 and the deceleration module 320 may be assembled with the pinion gear 330 while surrounded by the fixing member 460.

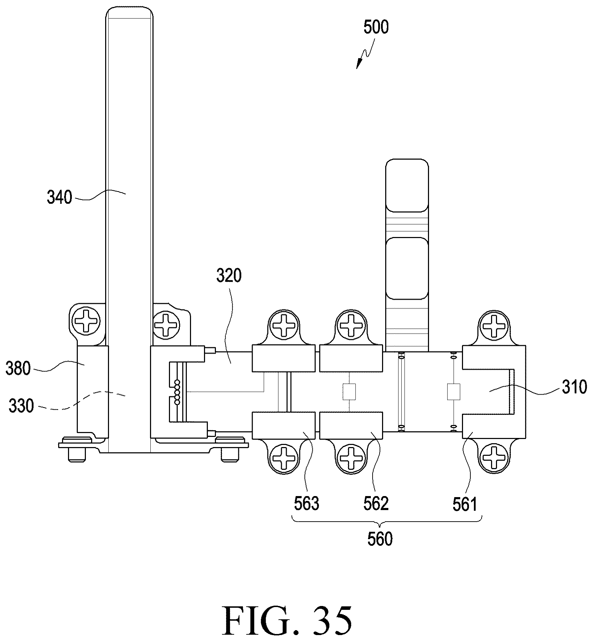

FIG. 35 is a view illustrating a driving assembly 500 according to an embodiment of the disclosure. Some or all of the components described with reference to FIG. 35 may be the same as those described with reference to FIGS. 1 to 34.

According to an embodiment, the driving assembly 500 may include a motor 310, a deceleration module 320, a pinion gear 330, a rack gear 340, and a third fixing member 380. The description of the components (e.g., the motor 310, deceleration module 320, pinion gear 330, rack gear 340, and third fixing member 380) made above with reference to FIGS. 1 to 31 may be likewise applied to the above-described components (e.g., the motor 310, deceleration module 320, pinion gear 330, rack gear 340, and third fixing member 380).

According to an embodiment, the driving assembly 500 may include a fixing member 560. The fixing member 560 may include a plurality of fixing members 561, 562, and 563. Some of the plurality of fixing members 561, 562, and 563 may support the motor 310, and some may support the deceleration module 320. The driving assembly 500 according to the embodiment described with reference to FIG. 35 may include a fixing member 562 disposed at a position corresponding to the support wall 319 described with reference to FIG. 31.

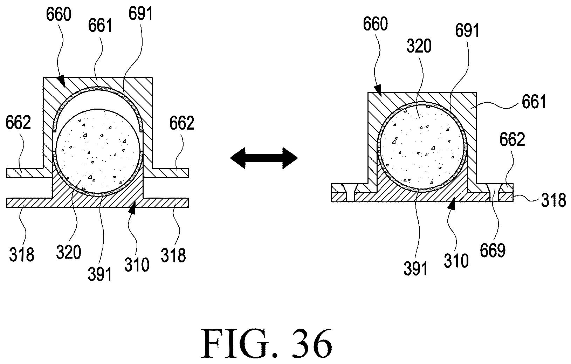

FIG. 36 is a view illustrating a fixing member 660, a motor 310, and a deceleration module 320 according to an embodiment of the disclosure. Some or all of the elements described with reference to FIG. 36 may be the same as those described with reference to FIGS. 1 to 35.

According to an embodiment, the fixing member 660 may be assembled to the motor 310 in a fourth direction (e.g., the +Z direction) perpendicular to the first, second, and third directions. The fixing member 660 may be separated from the motor 310 in a fifth direction (e.g., the -Z direction) opposite to the fourth direction.

According to an embodiment, the fixing member 660 may include a cover portion 661 surrounding the motor 310 and the deceleration module 320 and a protruding rib 662 protruding from the cover portion 661. The motor 310 may include a fixing rib 318 coupled to the protruding rib 662. The fixing member 660 and the motor 310 may be coupled to each other by a coupling member 669 penetrating the protruding rib 662 and the fixing rib 318. Unlike the driving assemblies 300, 400, and 500 according to the embodiment described with reference to FIGS. 1 to 35, in the driving assembly 600 according to the embodiment described with reference to FIG. 36, the fixing member 660 may be assembled to the motor 310 in the fourth direction (e.g., the +Z direction). The motor 310 may include a fixing rib 318 for coupling with the fixing member 660. The fixing rib 318 may protrude from the first case (e.g., the first case 315 of FIGS. 10 and 11). The fastening member 669 may pass through the protruding rib 662 of the fixing member 660 and the fixing rib 318 to fix the motor 310.

According to an embodiment, the driving assembly 600 may include dampers 391 and 691 surrounding the motor 310 and the deceleration module 320. The dampers 391 and 691 may include a first portion 391 surrounding a portion of the motor 310 and a second portion 691 surrounding the remaining portion of the motor 310. The second damping portion 691 may be disposed on the cover portion 661 of the fixing member 660. Each of the first portion 391 and the second portion 691 may have an arch shape.

The electronic device may include a first housing and a second housing that are disposed to be movable with respect to each other. The electronic device may include a driving assembly that generates power to move the first and second housings. The driving assembly may include a motor, a deceleration module, and a gear. The motor, the deceleration module, and the gear constituting the driving assembly may be integrally coupled through, e.g., welding or the like, not to be disassembled from one another. When any one of the motor, the deceleration module, and the gear fails, the motor, all of the motor, the deceleration module, and the gear integrally coupled should be disassembled.

The disclosure may aim to provide a motor, a deceleration module, and a gear that may be assembled and disassembled from one another.

The disclosure may aim to reduce the vibration and noise generated in the driving assembly.

Objects of the disclosure are not limited to those mentioned, but may rather be diverse without departing from the spirit and scope of the disclosure.

In the electronic device according to various embodiments of the disclosure, the motor, the deceleration module, and the pinion gear may be assembled to be separated from one another.

The electronic device according to various embodiments of the disclosure may reduce vibration and noise generated in the driving assembly by disposing the damper between the motor, the deceleration module, and the pinion gear.

Effects obtainable from the disclosure are not limited to the above-mentioned effects, and other effects not mentioned may be apparent to one of ordinary skill in the art from the following description.

An electronic device (e.g., 101 of FIGS. 1 to 36) according to an embodiment of the disclosure may comprise a first housing (e.g., 201 of FIGS. 1 to 36).

The electronic device (e.g., 101 of FIGS. 1 to 36) according to an embodiment of the disclosure may comprise a second housing (e.g., 202 of FIGS. 1 to 36) movably disposed with respect to the first housing (e.g., 201 of FIGS. 1 to 36).

The electronic device (e.g., 101 of FIGS. 1 to 36) according to an embodiment of the disclosure may comprise a driving assembly (300) configured to generate power to move the first housing (e.g., 201 of FIGS. 1 to 36) or the second housing (e.g., 202 of FIGS. 1 to 36).

The driving assembly (e.g., 300 of FIGS. 1 to 36) according to an embodiment of the disclosure may comprise a motor (e.g., 310 of FIGS. 1 to 36) including a shaft (e.g., 311 of FIGS. 1 to 36) configured to rotate and a first case (e.g., 315 of FIGS. 1 to 36) surrounding the shaft (e.g., 311 of FIGS. 1 to 36).

The driving assembly (e.g., 300 of FIGS. 1 to 36) according to an embodiment of the disclosure may comprise a deceleration module (e.g., 320 of FIGS. 1 to 36) including a deceleration gear portion (e.g., 324 of FIGS. 1 to 36) being connectable to the shaft (e.g., 311 of FIGS. 1 to 36) and a second case (e.g., 325 of FIGS. 1 to 36) surrounding the deceleration gear portion (e.g., 324 of FIGS. 1 to 36).

The driving assembly (e.g., 300 of FIGS. 1 to 36) according to an embodiment of the disclosure may comprise a pinion gear (e.g., 330 of FIGS. 1 to 36) fixed to any one of the first housing (e.g.., 201 of FIGS. 1 to 36) and the second housing (e.g., 202 of FIGS. 1 to 36) and configured to receive power through the deceleration gear portion (e.g., 324 of FIGS. 1 to 36).

The driving assembly (e.g., 300 of FIGS. 1 to 36) according to an embodiment of the disclosure may comprise a rack gear (e.g., 340 of FIGS. 1 to 36) engaged with the pinion gear (e.g., 330 of FIGS. 1 to 36) and configured to move together with the other one of the first housing (e.g., e.g., 201 of FIGS. 1 to 36 of FIGS. 1 to 36) and the second housing (e.g., e.g., 202 of FIGS. 1 to 36 of FIGS. 1 to 36).

The driving assembly (e.g., 300 of FIGS. 1 to 36) according to an embodiment of the disclosure may comprise a fixing member (e.g., 350 of FIGS. 1 to 36) surrounding at least part of the pinion gear (e.g., 330 of FIGS. 1 to 36).

The motor (e.g., 310 of FIGS. 1 to 36) according to an embodiment of the disclosure may comprise a first protrusion (e.g., 317 of FIGS. 1 to 36) protruding from the first case (e.g., 315 of FIGS. 1 to 36) toward the second case (e.g., 325 of FIGS. 1 to 36), configured to be inserted into at least a portion of the second case (e.g., 325 of FIGS. 1 to 36) along a first direction to allow the first case (e.g., 315 of FIGS. 1 to 36) to be fixed to the second case (e.g., 325 of FIGS. 1 to 36), and configured to move to an outside of the second case (e.g., 325 of FIGS. 1 to 36) along a second direction opposite to the first direction to allow the first case (e.g., 315 of FIGS. 1 to 36) to be separated from the second case (e.g., 325 of FIGS. 1 to 36).

The deceleration module (e.g., 320 of FIGS. 1 to 36) according to an embodiment of the disclosure may comprise a second protrusion (e.g., 326 of FIGS. 1 to 36) protruding from the second case (e.g., 325 of FIGS. 1 to 36) toward the fixing member (e.g., 350 of FIGS. 1 to 36), configured to be inserted into at least a portion of the fixing member (e.g., 350 of FIGS. 1 to 36) along the first direction to allow the second case (e.g., 325 of FIGS. 1 to 36) to be fixed to the fixing member (e.g., 350 of FIGS. 1 to 36), and configured to move to an outside of the fixing member (e.g., 350 of FIGS. 1 to 36) along the second direction to allow the second case (e.g., 325 of FIGS. 1 to 36) to be separated from the fixing member (e.g., 350 of FIGS. 1 to 36).

The motor (e.g., 310 of FIGS. 1 to 36) according to an embodiment of the disclosure may be configured to be separated from the driving assembly (e.g., 300 of FIGS. 1 to 36) when the first protrusion (e.g., 317 of FIGS. 1 to 36) moves to the outside of the deceleration module (e.g., 320 of FIGS. 1 to 36) along the second direction.

The deceleration module (e.g., 320 of FIGS. 1 to 36) according to an embodiment of the disclosure may be configured to be separated from the driving assembly (e.g., 300 of FIGS. 1 to 36) when the second protrusion (e.g., 326 of FIGS. 1 to 36) moves to the outside of the fixing member (e.g., 350 of FIGS. 1 to 36) along the second direction.

The deceleration module (e.g., 320 of FIGS. 1 to 36) according to an embodiment of the disclosure may include an insertion hole (e.g., 327 of FIGS. 1 to 36) configured to allow the first protrusion (e.g., 317 of FIGS. 1 to 36)) to be inserted thereinto.

The fixing member (e.g., 350 of FIGS. 1 to 36) according to an embodiment of the disclosure may include a recess (e.g., 386 of FIGS. 1 to 36) configured to allow the second protrusion (e.g., 326 of FIGS. 1 to 36) to be inserted thereinto.

The fixing member (e.g., 350 of FIGS. 1 to 36) according to an embodiment of the disclosure may comprise a first fixing member (e.g., 360 of FIGS. 1 to 36) surrounding the motor (e.g., 310 of FIGS. 1 to 36).

The fixing member (e.g., 350 of FIGS. 1 to 36) according to an embodiment of the disclosure may comprise a second fixing member (e.g., 370 of FIGS. 1 to 36) surroundingthe motor (e.g., 310 of FIGS. 1 to 36) and the deceleration module (e.g., 320 of FIGS. 1 to 36).

The fixing member (e.g., 350 of FIGS. 1 to 36) according to an embodiment of the disclosure may comprise a third fixing member (e.g., 380 of FIGS. 1 to 36) partially surrounding the pinion gear (e.g., 330 of FIGS. 1 to 36).

The driving assembly (e.g., 300 of FIGS. 1 to 36) according to an embodiment of the disclosure may comprise a damper (e.g., 390 of FIGS. 1 to 36) disposed in a position in which the motor (e.g., 310 of FIGS. 1 to 36) and the deceleration module (e.g., 320 of FIGS. 1 to 36) are detachable from the driving assembly (e.g., 300 of FIGS. 1 to 36).

The damper (e.g., 390 of FIGS. 1 to 36) according to an embodiment of the disclosure may comprise a first damper (e.g., 391 of FIGS. 1 to 36) disposed between the motor (e.g., 310 of FIGS. 1 to 36) and the fixing member (e.g., 360 of FIGS. 1 to 36).

The damper (e.g., 390 of FIGS. 1 to 36) according to an embodiment of the disclosure may comprise a second damper (e.g., 392 of FIGS. 1 to 36) disposed between the motor (e.g., 310 of FIGS. 1 to 36) and the deceleration module (e.g., 320 of FIGS. 1 to 36).

The damper (e.g., 390 of FIGS. 1 to 36) according to an embodiment of the disclosure may comprise a third damper (e.g., 393 of FIGS. 1 to 36) disposed between the deceleration module (e.g., 320 of FIGS. 1 to 36) and the pinion gear (e.g., 330 of FIGS. 1 to 36).

The deceleration module (e.g., 320 of FIGS. 1 to 36) according to an embodiment of the disclosure may comprise the deceleration module (e.g., 320 of FIGS. 1 to 36) includes a fence (e.g., 328 of FIGS. 1 to 36) disposed between the first case (e.g., 315 of FIGS. 1 to 36) and the second case (e.g., 325 of FIGS. 1 to 36) and having an inner diameter smaller than an outer diameter of the deceleration gear portion (e.g., 324 of FIGS. 1 to 36).

The electronic device (e.g., 101 of FIGS. 1 to 36) according to an embodiment of the disclosure may comprise a partition wall (e.g., 2026 of FIGS. 1 to 36) spaced apart from the driving assembly (e.g., 300 of FIGS. 1 to 36).

According to an embodiment of the disclosure, a space (e.g., 2027 of FIGS. 1 to 36) may be formed between the driving assembly (e.g., 300 of FIGS. 1 to 36) and the partition wall (e.g., 2026 of FIGS. 1 to 36), in which the motor (e.g., 310 of FIGS. 1 to 36), the deceleration module (e.g., 320 of FIGS. 1 to 36) and the fixing member (e.g., 350 of FIGS. 1 to 36) are movable.

The fixing member (e.g., 350 of FIGS. 1 to 36) according to an embodiment of the disclosure may be disposed around the motor (e.g., 310 of FIGS. 1 to 36) and the deceleration module (e.g., 320 of FIGS. 1 to 36), and the motor (e.g., 310 of FIGS. 1 to 36) and the deceleration module (e.g., 320 of FIGS. 1 to 36) may be fixed to the first housing (e.g., e.g., 201 of FIGS. 1 to 36 of FIGS. 1 to 36) or the second housing (e.g., e.g., 202 of FIGS. 1 to 36 of FIGS. 1 to 36) by the fixing member (e.g., 350 of FIGS. 1 to 36).

The deceleration module (e.g., 320 of FIGS. 1 to 36) according to an embodiment of the disclosure may be configured to be detachable from the driving assembly (e.g., 300 of FIGS. 1 to 36) after the motor (e.g., 310 of FIGS. 1 to 36) is detached from the driving assembly (e.g., 300 of FIGS. 1 to 36).

While the disclosure has been shown and described with reference to exemplary embodiments thereof, it will be apparent to those of ordinary skill in the art that various changes in form and detail may be made thereto without departing from the spirit and scope of the disclosure as defined by the following claims.

While the disclosure has been described and shown in connection with an embodiment thereof, it should be appreciated that an embodiment is intended as limiting the disclosure but as illustrative. It will be apparent to one of ordinary skill in the art that various changes may be made in form and detail without departing from the overall scope of the disclosure, including the appended claims and their equivalents.

## Claims

1. An electronic device (101) comprising:
a first housing (201);
a second housing (202) movably coupled to the first housing (201); and
a driving assembly (300) configured to move the first housing (201) or the second housing (202),
wherein the driving assembly (300) comprises:
a motor (310) including a rotatable shaft (311) and a first case (315) surrounding the rotatable shaft (311);
a pinion gear (330);
a reduction gear module (320) coupling the rotatable shaft of the motor (310) to the pinion gear (330);
reduction gear (320) including a deceleration gear portion (324) being connectable to the rotatable shaft (311) and a second case (325) surrounding the deceleration gear portion (324);a rack gear (340) engaged with the pinion gear (330) and configured to move the first housing (201) or the second housing (202) in conjunction with rotation of the pinion gear (330); and
a fixing member (350) detachably fixing at least one of the motor (310), the pinion gear (330), and the reduction gear module (320) to the first housing (201) or second housing (202), ; and
reduction gear module
a coupling structure (307) extending from one of the first case (315) and the second case (325) toward the other of the first case (315) and the second case (325) to detachably couple the motor (310) to the reduction gear module (320),
wherein the motor (310), the reduction gear module (320), and the pinion gear (330) are detachably coupled to one another.

2. The electronic device of claim 1,
wherein the coupling structure (307) includes:
a first protrusion (317) protruding from the one of the first case (315) and the second case (325) toward the other of the first case (315) and the second case (325); and
an insertion hole (327) formed in the other of the first case (315) and the second case (325) to face the first protrusion (317) and configured to receive the first protrusion (317).

3. The electronic device of claim 2,
wherein the coupling structure (307) includes:
a second protrusion (326) protruding from one of the second case (325) and the fixing member (350) toward the other of the second case (325) and the fixing member (350); and
a recess (386) formed in the other of the second case (325) and the fixing member (350) to face the second protrusion (326) and configured to receive the second protrusion (326).

4. The electronic device of any one of claims 1 to 3,
wherein the fixing member (350) comprises at least one of:
a first fixing member (360) at least partially surrounding the motor (310);
a second fixing member (370) at least partially surrounding the motor (310) and the reduction gear module (320); and
a third fixing member (380) at least partially surrounding the pinion gear (330).

5. The electronic device of claim 4,
wherein the driving assembly (300) further comprises:
a damper (390) disposed in a position in which the motor (310) and the reduction gear module (320) are detachable from the driving assembly (300).

6. The electronic device of claim 5,
further comprising at least one of:
a first damper (391) disposed between the motor (310) and the fixing member (350);
a second damper (392) disposed between the motor (310) and the reduction gear module (320); and
a third damper (393) disposed between the reduction gear module (320) and the pinion gear (330).

7. The electronic device of any one of claims 1 to 6,
wherein the reduction gear module (320) includes a fence (328) disposed between the first case (315) and the second case (325) and having an inner diameter smaller than an outer diameter of the reduction gear portion (324).

8. The electronic device of any one of claims 1 to 7, further comprising:
a partition wall (2026) spaced apart from the driving assembly (300), and
wherein a space (2027) is formed between the driving assembly (300) and the partition wall (2026), in which at least one of the motor (310), the reduction gear module (320) and the fixing member (350) are movable.

9. The electronic device of any one of claims 1 to 8,
wherein the fixing member (350) at least partially surrounds the motor (310) and the reduction gear module (320), and the motor (310) and the reduction gear module (320) are detachably fixed to the first housing (201) or the second housing (202) by the fixing member (350).

10. The electronic device of any one of claims 1 to 9,
wherein the reduction gear module (320) is configured to be removable from the driving assembly (300) after the motor (310) is removed from the driving assembly (300).

11. The electronic device of any one of claim 1 to 10, further comprising a flexible display disposed in at least one of the first housing (201) or the second housing (202) and configured to extend or retract as the first housing (201) and the second housing (202) move with respect to one another.
